# EUROPEAN PATENT SPECIFICATION

(11) **EP 1 841 222 B1**
(45) Date of publication and mention of the grant of the patent: **13.05.2009**
(21) Application number: 07251272.6
(22) Date of filing: 26.03.2007
(51) Int. Cl.: G03B 21/10, G03B 21/28, G03B 21/14

(54) **Rear projection display apparatus**
Rückprojektionsanzeigevorrichtung
Appareil d'affichage à projection arrière

(30) Priority: 31.03.2006 JP 2006099646
(43) Date of publication of application: 03.10.2007
(73) Proprietor: Sony Corporation, Minato-ku Tokyo (JP)
(72) Inventor: Suko, Naoto, Minato-ku Tokyo (JP); Tokumi, Atsushi, Minato-ku Tokyo (JP); Utsumi, Kenichiro, Minato-ku Tokyo (JP); Nakamura, Mitsuru, Minato-ku Tokyo (JP)
(74) Representative: Nicholls, Michael John

(56) References cited:
- JP-A- 2006 003 445
- US-A- 6 059 412
- US-A1- 2006 007 405

## Description

### CROSS REFERENCES TO RELATED APPLICATIONS

The present invention contains subject matter related to Japanese Patent Application JP 2006-099646 filed in the Japanese Patent Office on March 31, 2006, the entire contents of which being incorporated herein by reference.

### BACKGROUND OF THE INVENTION

### 1. Field of the Invention

This invention relates to a rear projection display apparatus which projects an image from the rear side of a screen to display the image on the screen.

### 2. Description of the Related Art

In a rear projection display apparatus which uses a screen of the transmission type, a flux of light from a light source is irradiated, for example, upon a liquid crystal panel of the transmission type. The light flux is modulated in accordance with image information by the transmission type liquid crystal panel and is then projected in an enlarged fashion by a projection lens. Then, the optical path of the projected light flux is changed by a reflecting mirror so that the light flux is introduced to the rear face of the screen.

Consequently, even a very small amount of displacement of the optical axis of the projection lens or rotation of an image around the optical axis is enlarged by the projection lens and hence the image is projected as an image whose position is displaced by a great amount from its original position on the screen. Therefore, the rear projection display apparatus usually includes a position adjustment mechanism for adjusting the position of the image to be projected on the screen.

In some rear projectors which include an image position adjustment mechanism in related art, the image adjustment is performed by applying, after the rear projector is assembled, a spacer or a like element to an optical unit or to a mounting base for the optical unit with reference to an average value in dispersion of the positional displacement of the image in mass production.

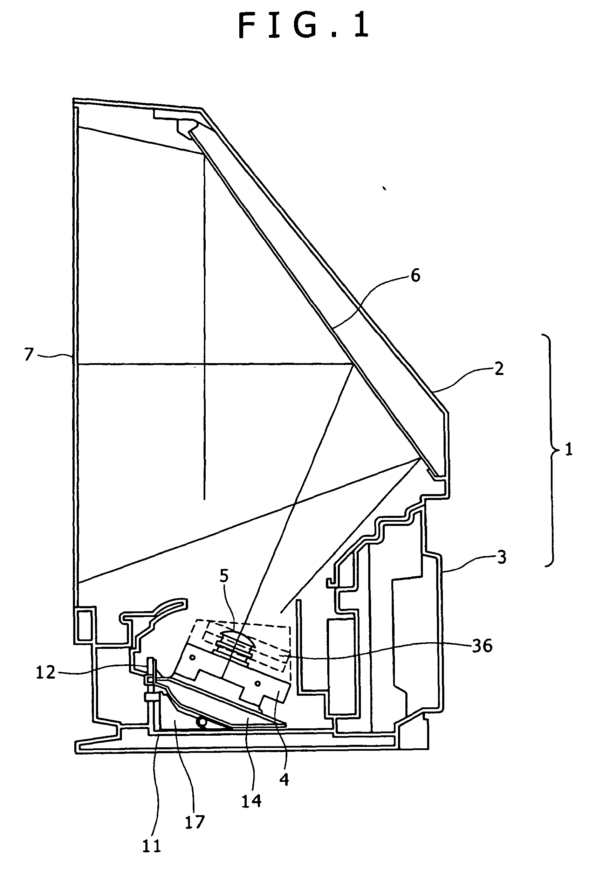

Another method for adjusting an image on a screen of the transmission type is disclosed in Japanese Patent Laid-Open No. 2006-3445 (particularly page 2 and FIG. 1).

In particular, Japanese Patent Laid-Open No. 2006-3445 (particularly page 2 and FIG. 1) discloses a rear projector wherein a degree of freedom in image position adjustment is provided for each set to allow image projection of a high degree of accuracy.

The rear projector includes an image formation section including an optical apparatus which modulates a flux of light emitted from a light source to form an optical image in response to image information and a projection optical system which projects the optical image in an enlarged fashion by means of a projection lens. The rear projection apparatus further includes an optical unit housing in which the optical apparatus is accommodated, an outer housing in which the optical unit housing and the projection lens are accommodated, and a screen on which the optical image formed by the image formation section is projected. The optical unit housing and the projection lens are integrated with each other. The rear projector further includes an image position adjustment section provided in the optical unit housing. The image position adjustment section includes a support section mounted for pivotal motion in an upward and downward direction of an image projected on the screen. The image position adjustment section further includes an adjuster member having an inclined face and mounted for back and forth movement to pivot the optical unit housing and the projection lens in the upward and downward direction of the image around the support section.

With the rear projector, the position of the image to be projected can be adjusted only by the back and forth movement of the adjuster member.

JP 2006 003445 A discloses a rear projector designed to eliminate variants in mass production by providing means for adjusting the position of an image in an up-and-down direction. The rear projector comprises an optical unit have a boss for a support, turnable in the up-and-down direction of an image line projected to a screen. An adjustor block is provided having an inclined surface and movable to advance/retreat by the rotating operation of an adjusting screw, whereby the optical unit and a projection lens are turned with the boss for support as a fulcrum, and the image line is adjusted in the up-and-down direction.

US 6 059 412 A discloses a rear projection monitor comprising a guide optical system having a movable reflecting surface, and which is configured to adjust the position of the image on the screen by changing the incident angle of light emitted from the projection optical system to the reflecting surface.

US 2006/007405 A1 discloses an adjustment apparatus comprising a base seat, sliding bracket and supporting stand, in which the lower surface of the sliding bracket is in contact with the upper surface of the base seat and capable of being slid thereon. A mounting plate is installed at the upper end of the sliding bracket and a raised pin is projected on the surface of the mounting plate. The raised pin can be engaged with a rotating plate. A lens of an optical engine fixed and mounted on the surface of the rotating plate can be rotated levelly around the raised pin to do an adjustment to revise the rightward and leftward trapezoid deformation of an image projected on a screen.

### SUMMARY OF THE INVENTION

An image projected on a screen by a rear projection display apparatus is likely to suffer from trapezoidal distortion wherein the image is distorted into a trapezoidal shape or rotational distortion wherein the image is rotated around the center of the screen. However, in the rear projector in related art wherein a spacer or a like element is applied to an optical unit or to a mounting base for the optical unit with reference to an average value in dispersion in mass production, it is necessary to prepare spacers or like elements having different dimensions corresponding to dispersions in mass projection in advance and apply a suitable one of the spacers or like elements to a predetermined location in a housing after a rear projector is assembled. Therefore, the rear projector of the type described is disadvantageous in that the adjustment of the image position is complicated and cumbersome.

Meanwhile, in the rear projector disclosed in Japanese Patent Laid-Open No. 2006-3445 (particularly page 2 and FIG. 1), the adjuster member is moved back and forth to vary the magnitude of the forward inclination of the optical unit to adjust the image position of the projection lens in the upward and downward direction. Therefore, the rear projector is disadvantageous in that, although it can correct trapezoidal distortion, it may not adjust rotational distortion of the image. The rear projector is disadvantageous also in that, since the adjuster member is moved back and forth from the rear face side of the apparatus to adjust the image, it is inferior in operability in that it is not easy to perform the adjustment while the image is visually confirmed.

Therefore, according to the embodiments of the present invention, it is desirable to provide a rear projection display apparatus which includes an adjustment mechanism by which trapezoidal distortion or rotational distortion of an image on a screen can be corrected simply and readily.

The scope of the invention is defined in the appended claims.

In the rear projection display apparatus, if force is applied to the optical device mounting plate to deform the same, then the upper face of the optical device mounting plate is inclined to change the angle of the optical axis of the optical unit. Consequently, the center of the projected image can be moved in the upward or downward direction in response to the deformed state of the optical device mounting plate thereby to correct trapezoidal distortion. Or, the projected image can be rotated around the center thereof thereby to correct rotational distortion of the image.

With the rear projection display apparatus, trapezoidal distortion and rotational distortion of the projected image on the screen can be corrected.

The above and other features and advantages of the present invention will become apparent from the following description and the appended claims, taken in conjunction with the accompanying drawings in which like parts or elements denoted by like reference symbols.

### BRIEF DESCRIPTION OF THE DRAWINGS

FIG. 1 is a schematic view showing an internal configuration of a rear projection display apparatus to which the present invention is applied;
FIG. 2 is a perspective view of a bottom cabinet of the rear projection display apparatus of FIG. 1;
FIG. 3 is an enlarged perspective view showing an optical unit accommodation section of the bottom cabinet of FIG. 2 and several members around the optical unit accommodation section;
FIG. 4 is a perspective view of the optical unit accommodation section shown in FIG. 3 with a cover removed;
FIG. 5 is a perspective view showing a shield metal plate of the optical unit accommodation section shown in FIG. 4 with a circuit board removed;
FIG. 6 is a perspective view showing optical parts of the optical unit accommodation section shown in FIG. 5 with the shield metal plate removed;
FIG. 7 is an exploded perspective view showing the optical unit accommodation section of a bottom frame shown in FIG. 2 as viewed from the rear face side of the bottom cabinet;
FIG. 8A is a perspective view showing an entire cable clamp attached to the shield metal plate shown in FIG. 5 and FIGS. 8B, 8C and 8D are perspective views showing a chassis locking portion, a flat clamp portion and the flat clamp portion in a closed state, respectively;
FIGS. 9A to 9E show different stages in mounting of the cable clamp of FIGS. 8A to 8D and wherein FIG. 9A is a perspective view showing the cable clamp joined to a conductive elastic member, FIG. 9B is a sectional view showing the cable clamp attached to the shield metal plate, FIGS. 9C and 9D are perspective views showing the cable clamp before it is secures to a flat cable, and FIG. 9E is a perspective view showing the cable clamp after it is secured to the flat cable;
FIGS. 10A to 10E are schematic views illustrating several examples of use of the cable clamp with a conductive elastic member of FIGS. 9A to 9E;
FIG. 11 is a perspective view of an optical device mounting plate of the optical unit accommodation section of FIG. 3;
FIG. 12 is a perspective view showing the optical device mounting plate of FIG. 11 in an inverted state;
FIG. 13 is a perspective view showing the optical device mounting plate of FIG. 11 and an adjustment plate;
FIG. 14 is a perspective view of the bottom frame shown in FIG. 7 with the optical unit accommodation section removed;
FIGS. 15A and 15B are a front elevational view and a plan view, respectively, of a base plate and a bottom wall of the bottom frame shown in FIG. 14;
FIG. 16 is a plan view showing the adjustment plate shown in FIG. 13 mounted on the base plate and the bottom wall shown in FIGS. 15A and 15B;
FIGS. 17A, 17B, 17C, 17D, 17E and 17F are a perspective view, a plan view, a sectional plan view, a left side elevational view, a front elevational view and a rear elevational view, respectively, of a V adjustment piece;
FIGS. 18A to 18E illustrate optical axis adjustment of the optical unit by means of the adjustment plate and wherein FIG. 18A shows the adjustment plate displaced fully from the optical device mounting plate secured to the bottom wall, FIG. 18B shows the adjustment plate immediately after it is engaged with the optical device mounting plate, and FIGS. 18c to 18e show the adjustment plate engaged with the optical device mounting plate to tilt the optical device mounting plate;
FIG. 19 is a plan view illustrating positional setting by means of the V adjustment piece of the adjustment plate shown in FIG. 15;
FIGS. 20A to 20C are plan views illustrating positional setting of the adjustment plate shown in FIG. 19 by means of the V adjustment piece and wherein FIGS. 20A, 20B and 20C illustrate securing states through screw insertion holes of the "number 2", "number 3" and "number 1" shown in FIG. 17E, respectively;
FIGS. 21A, 21B and 21C show the optical device mounting plate mounted on the base plate and the bottom wall of FIGS. 15A and 15B and are a plan view, a sectional view taken along line A-A of FIG. 21A and a side elevational view, respectively;
FIGS. 22A, 22B, 22C, 22D, 22E and 22F are a perspective view, a plan view, a front elevational view, a right side sectional view, a right side elevational view and a rear elevational view, respectively, showing an R adjustment piece shown in FIGS. 21A to 21C; and
FIGS. 23A to 23D are plan views illustrating adjustment by means of the R adjustment piece in the position setting of the optical device mounting plate mounted on the base plate and the bottom wall of FIGS. 15A and 15B and wherein FIG. 23A shows the optical device mounting plate before adjustment and FIGS. 23B, 23C and 23D show the optical device mounting plate in secured states through screw insertion holes represented by the "reference character A", "reference character B" and "reference character C", respectively.

### DETAILED DESCRIPTION OF THE PREFERRED EMBODIMENTS

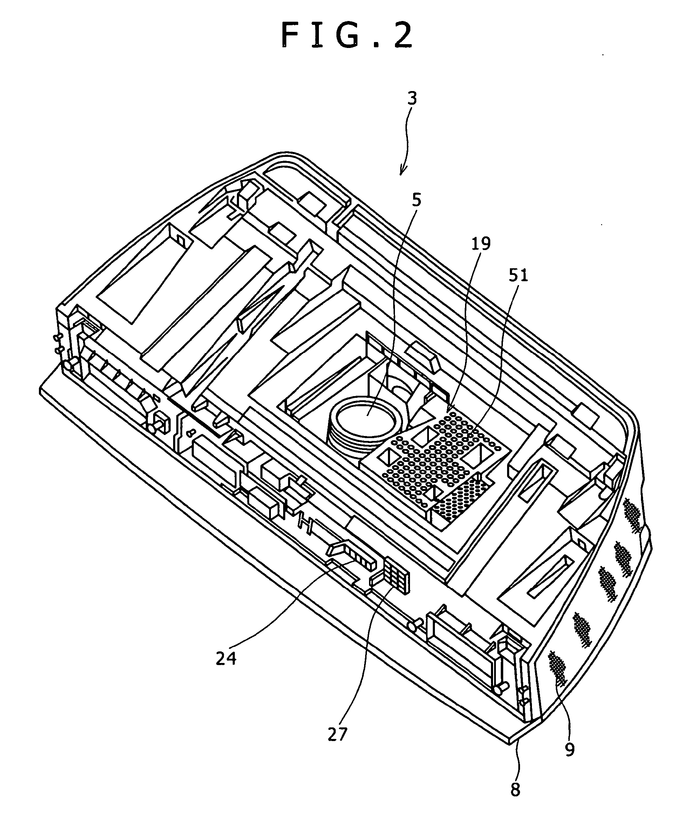

FIG. 1 is a schematic view showing an internal configuration of an entire rear projection display apparatus to which the present invention is applied, and FIG. 2 is a perspective view of a bottom cabinet of the rear projection display apparatus.

Referring first to FIG. 1, the rear projection display apparatus includes a cabinet 1 serving as a housing thereof. The cabinet 1 has a two-piece configuration including a top cabinet 2 shown on the upper side in FIG. 1 and a bottom cabinet 3 shown on the lower side in FIG. 1. A reflecting mirror 6 and a screen 7 are provided on the top cabinet 2, and an optical unit 4 is disposed in the bottom cabinet 3. The optical unit 4 modulates a flux of light emitted from a light source not shown in the figure to form an optical image in response to image information and projects the optical image in an enlarged fashion from a projection lens 5. The optical image projected in an enlarged fashion from the projection lens 5 is reflected by the reflecting mirror 6 disposed obliquely in the top cabinet 2 and then projected on the screen 7 on the front face of the cabinet 1.

FIG. 2 shows an appearance of the bottom cabinet 3. Referring to FIG. 2, the bottom cabinet 3 includes an outer housing which in turn includes a bottom frame 8 formed by molding of a plastic resin and having a substantially "o " shape, and a mesh cover 9 having openings formed on the surface thereof like a net for radiating heat therethrough. The optical unit 4 (FIG. 1) including the projection lens 5, a power supply, a light source, an exhaust fan and a control circuit are accommodated in the outer housing.

An opening is provided at a substantially center of an upper portion of the bottom cabinet 3 such that the projection lens 5 is exposed therethrough and an optical unit accommodation section 19 wherein the optical unit 4 is covered with a cover 51 is exposed.

A left lower side of the bottom cabinet 3 shown in FIG. 2 which is the front face side of the screen 7 is used as an operation panel for a user. An infrared sensor for remote control not shown, input terminals for connection of AV apparatus, a V adjustment piece 24 serving as a second adjustment piece and an R adjustment piece 27 serving as a first adjustment piece are provided on the operation panel for a user.

The V adjustment piece 24 and the R adjustment piece 27 are used to adjust image distortion on the screen after the rear projection display apparatus is assembled.

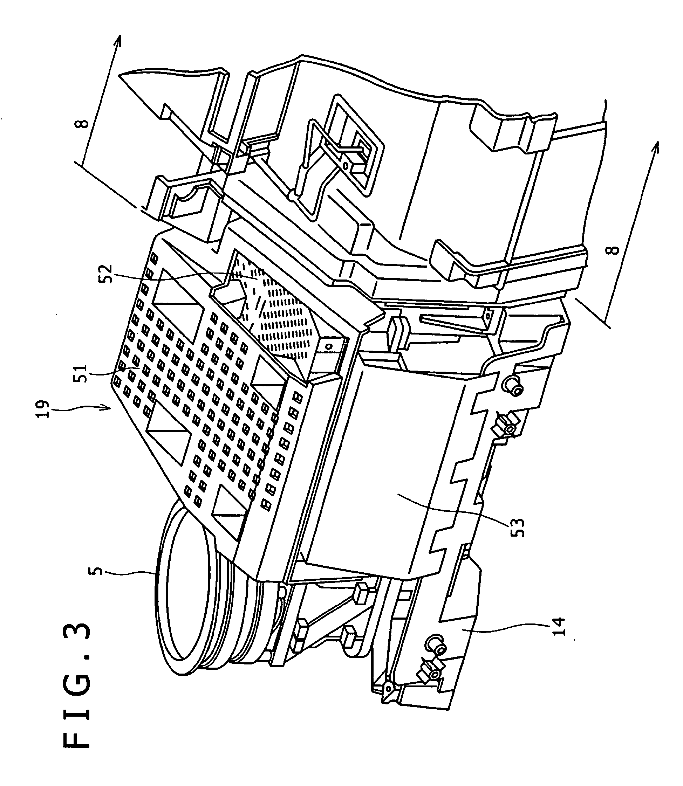

FIG. 3 shows the projection lens 5 and the optical unit accommodation section 19 in an exposed state of the bottom cabinet 3 shown in FIG. 2 and several members around them.

Referring to FIG. 3, the projection lens 5 and the optical unit accommodation section 19 are mounted on an optical device mounting plate 14. For electromagnetic shielding, the outer periphery of the optical unit accommodation section 19 is covered with covers 52 and 53 in addition to the cover 51, and a large number of perforations for heat radiation are provided in the covers 51 and 52 provided on the upper side.

Now, the optical unit 4 accommodated in the optical unit accommodation section 19 is described with reference to FIGS. 3 to 7.

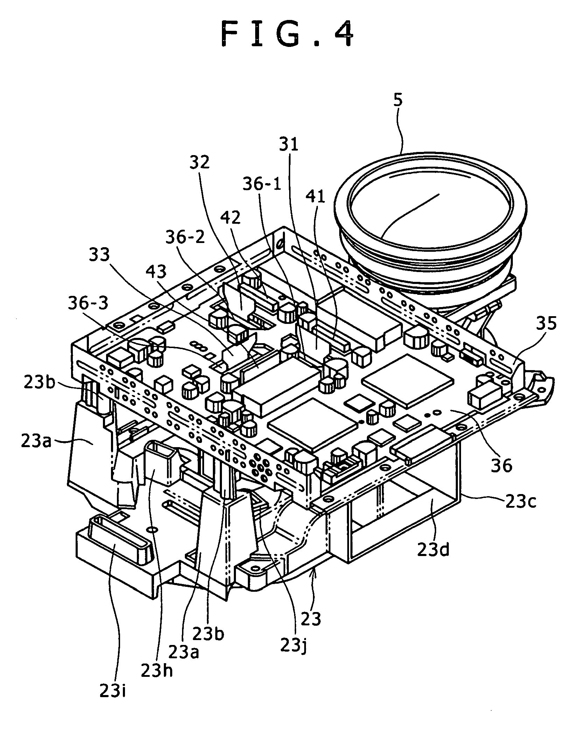

FIG. 4 shows the projection lens 5 and the optical unit accommodation section 19 of the optical unit 4 with the covers 51, 52 and 53 removed and with the optical device mounting plate 14 removed.

In a state wherein the covers 51 and 52 having a large number of perforations are removed, a shield metal plate 35 on which a liquid crystal panel control board 36 is mounted is disposed closely to the projection lens 5.

The liquid crystal panel control board 36 has three openings 36-1 to 36-3 of a substantially rectangular shape and has control circuit parts, which correspond to the three primary colors of light, that is, red (R), green (G) and blue (B), mounted thereon. An R flexible cable 31, a G flexible cable 32 and a B flexible cable 33 each in the form of a flexible flat cable (FPC) are connected at one end thereof to three FPC connectors 41, 42 and 43 on the liquid crystal panel control board 36, respectively, and at the other end thereof to a liquid crystal panel for an R signal, a liquid crystal panel for a G signal and a liquid crystal panel for a B signal, respectively. The three FPC connectors 41, 42 and 43 are provided in the proximity of one of the major sides of the three openings 36-1 to 36-3 of the liquid crystal panel control board 36, respectively.

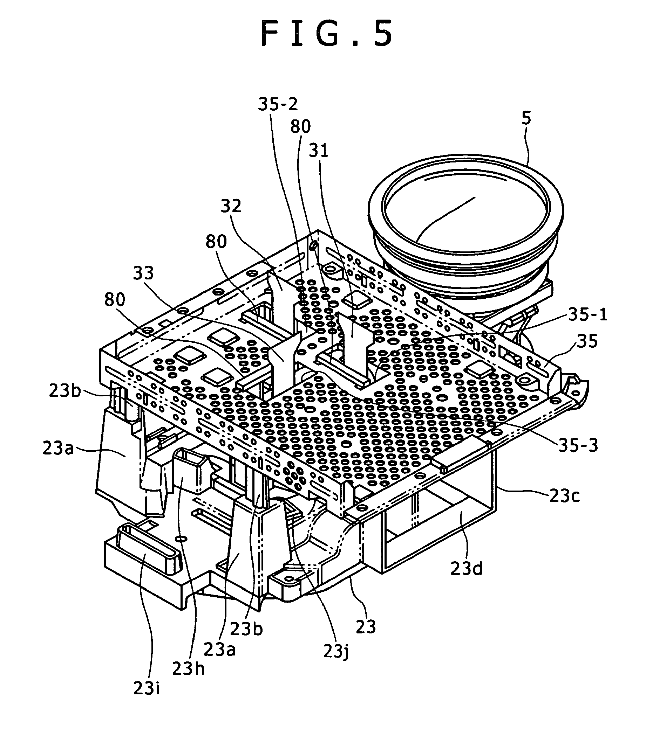

Referring to FIG. 5 which shows the projection lens 5 and the optical unit accommodation section 19 with the liquid crystal panel control board 36 removed, the shield metal plate 35 is formed like a box from a metal plate of the iron type having a large number of perforations formed therein. Three openings 35-1 to 35-3 of a substantially rectangular shape for threading the flexible cables 31, 32 and 33 therethrough, respectively, are formed on a bottom wall of the shield metal plate 35. Totaling three cable clamps 80 each serving as a securing member are provided in the proximity of one of the major sides of the openings 35-1 to 35-3. The three cable clamps 80 are used to secure the flexible cables 31, 32 and 33 to the shield metal plate 35 without a slack.

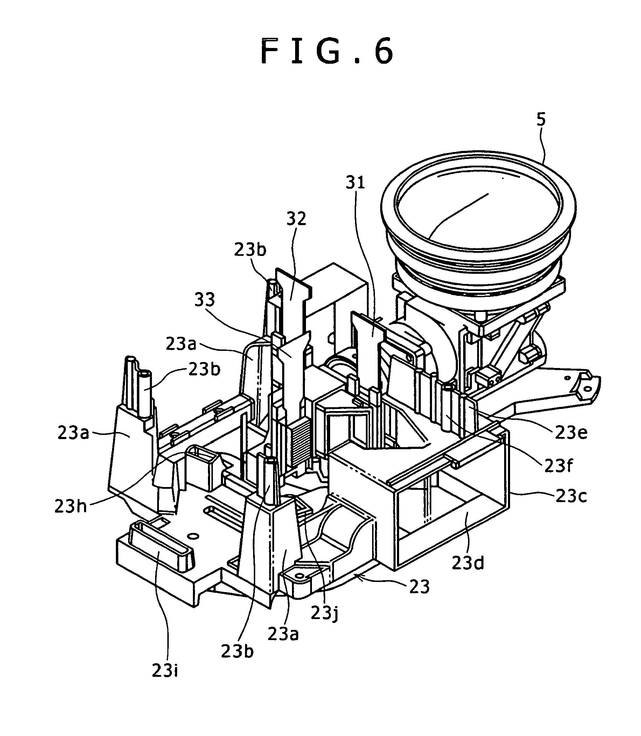

FIG. 6 shows the projection lens 5 and the optical unit accommodation section 19 with the shield metal plate 35 shown in FIG. 5 removed.

Referring to FIG. 6, the projection lens 5 is supported, at a supporting portion provided at a lower portion thereof, at a predetermined position on a base block 23 produced by die casting of aluminum alloy.

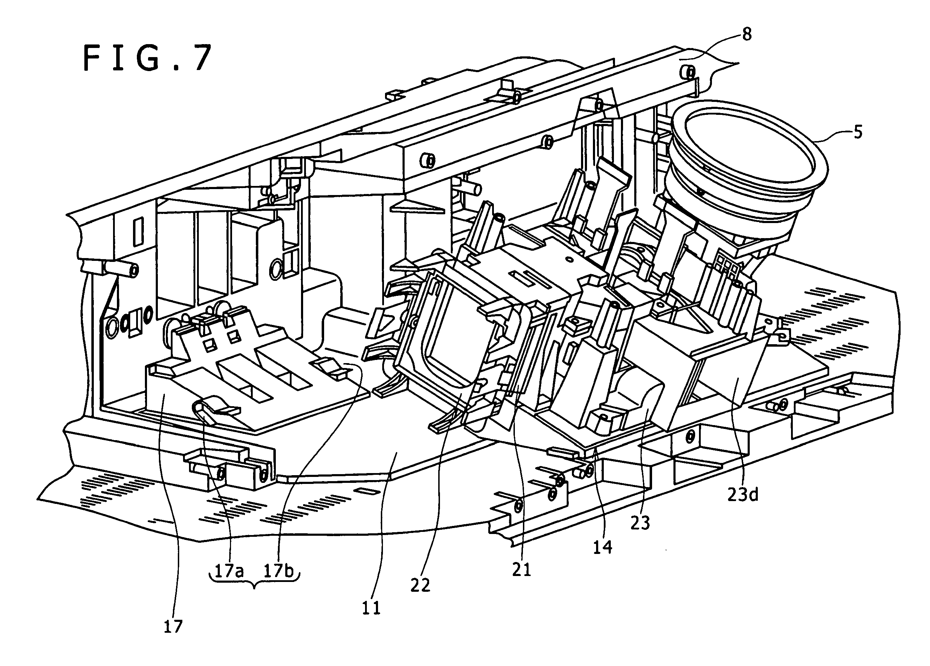

The base block 23 has a substantially rectangular shape as viewed from above and has, on the right lower side in FIG. 6, an cooling fan attachment opening 23d for a blast duct 23c having a cross section of a substantially rectangular shape. Further, the base block 23 has stands 23a provided at three corners thereof. On the other sides of the base block 23 with respect to the projection lens 5, three optical filter attachment guides 23h, 23i and 23j for attaching an optical filter unit 21 shown in FIG. 7 are provided.

Further, as seen in FIG. 6, a shaft 23f having a screw insertion hole provided thereon is provided uprightly on the blast duct 23c, and a spacer 23e in the form of a wall is formed on the blast duct 23c. Further, a shaft 23b having a screw insertion hole formed thereon is formed integrally at an upper portion of each of the three stands 23a.

A light synthesis prism is disposed substantially at the center of the base block 23 in FIG. 6, and three liquid crystal panels and dichroic mirrors for color separation are disposed around the color synthesis prism.

The base block 23 is worked such that a lower face thereof shown in FIG. 6 may be a reference face.

In the base block 23 having such a configuration as described above, the three liquid crystal panels and dichroic mirrors for color separation are disposed at respective predetermined positions, and then the projection lens 5 is attached. Thereafter, the optical filter unit 21 shown in FIG. 7 is attached with reference to the three optical filter attachment guides 23h, 23i and 23j shown in FIG. 6, and a light source attachment port 22 is provided on the optical filter unit 21.

Then, the shield metal plate 35 of a substantially box shape is placed on and secured, as shown in FIG. 5, to the upper faces of the shafts 23b on the three stands 23a and the shaft 23f on the blast duct 23c of the base block 23 shown in FIG. 6. At this time, the flexible cables 31, 32 and 33 are led out upwardly through the three openings 35-1 to 35-3 of the shield metal plate 35 and secured to the shield metal plate 35 by means of the three cable clamps 80 shown in FIG. 5.

Then, to the shield metal plate 35 shown in FIG. 5, the liquid crystal panel control board 36 is secured as seen in FIG. 4. At this time, the flexible cables 31, 32. and 33 are led out upwardly through the openings 36-1 to 36-3 provided in the liquid crystal panel control board 36 and secured and electrically connected to the three FPC connectors 41, 42 and 43 shown in FIG. 4, respectively.

Then, the covers 51, 52 and 53 are provided at the upper location to form an electric shield around the liquid crystal panel control board 36.

It is to be noted that the optical unit 4 is composed of the projection lens 5, three liquid crystal panels, color synthesis prisms, color separation dichroic mirrors, optical filter unit 21, light source attachment port 22, liquid crystal panel control board 36, shield metal plate 35 and base block 23 on which the components mentioned are placed.

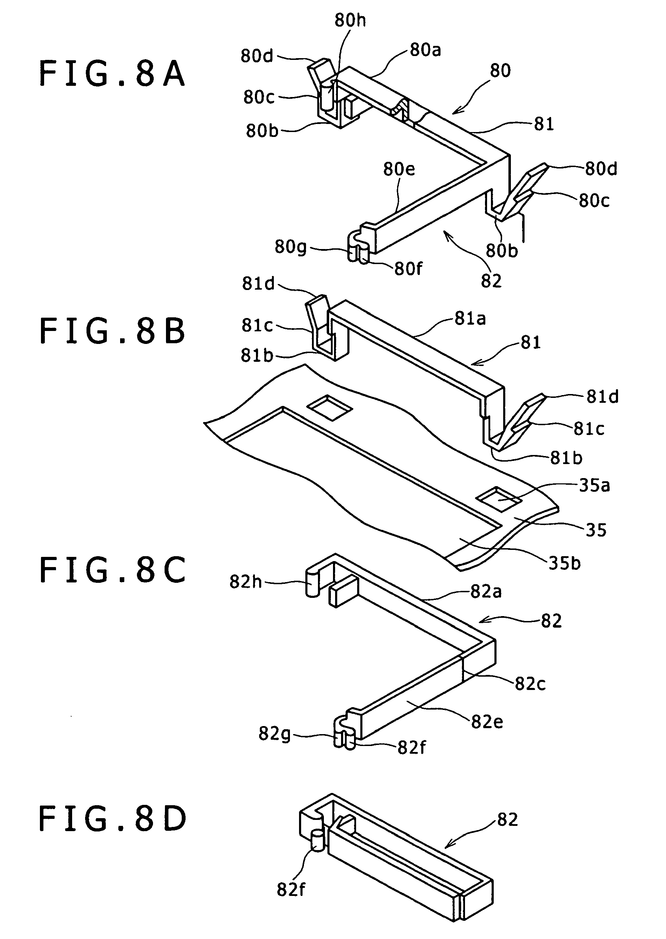

Now, the cable clamps 80 shown in FIG. 5 provided on the shield metal plate 35 are described with reference to FIGS. 8A to 8D, 9A to 9E and 10A to 10E.

FIG. 8A shows an appearance of a cable clamp 80. Referring to FIG. 8A, the cable clamp 80 shown is produced by molding of a plastic resin and includes two portions including a chassis locking portion 81 serving as a fitting portion to be used for attachment to the shield metal plate 35 and a flat clamp portion 82 serving as a retaining portion for securing a flexible wiring board without any play.

The configuration of the chassis locking portion 81 and the flat clamp portion 82 is described with reference to FIGS. 8B to 8D.

FIG. 8B is a perspective view and shows the chassis locking portion 81 extracted from the cable clamp 80 shown in FIG. 8A.

Referring to FIG. 8B, the chassis locking portion 81 includes a body 81a having a rectangular shape and a flattened cross section, and a pair of u-shaped locking portions provided at the opposite ends of the body 81a. Each of the locking portions has an insertion portion 81b, a latching portion 81c, and a gripping portion 81d. The insertion portions 81b and the latching portions 81c are fitted, with the gripping portions 81d on the opposite sides of the body 81a inclined toward the body 81a, into the substantially rectangular latching holes 35a formed in the shield metal plate 35, and then the gripping portions 81d are released so that the latching holes 35a and the latching portions 81c are latched to each other thereby to secure the chassis locking portion 81 itself to the shield metal plate 35.

FIGS. 8C and 8D are perspective views showing the flat clamp portion 82 extracted from the cable clamp 80 shown in FIG. 8A, and FIG. 8D shows the clamp in the closed state.

The flat clamp portion 82 is formed by bending a plate having a flattened rectangular cross section so as to have an L shape, and is bent short at one end portion of a body 82a thereof so as to provide an engaged projection 82h at the end thereof. A deep cut 82c is provided in the proximity of the bent portion of the L shape of the flat clamp portion 82 to allow the flat clamp portion 82 to be bent so as to provide the clamp 82e which can be pivoted toward the other end side of the flat clamp portion 82. An engaging pawl 82g and a gripping portion 82f are provided at the end of the clamp 82e.

The clamp 82e is bent at the cut portion 82c as seen in FIG. 8D until the engaging pawl 82g and the engaged projection 82h are engaged with each other to establish a latched state wherein they are closed with each other. If the gripping portion 82f is held down in the closed state of the engaging pawl 82g and engaged projection 82h as seen in FIG. 8D, then the engaging pawl 82g is released from the engagement with the engaged projection 82h so that the state illustrate in FIG. 8C can be restored.

In particular, the cable clamp 80 is produced by forming the chassis locking portion 81 shown in FIG. 8B and the flat clamp portion 82 shown in FIG. 8C in an integrated relationship with each other such that the bodies 81a and 82a thereof extend perpendicularly to each other as indicated by the broken portion of the body 80a of FIG. 8A.

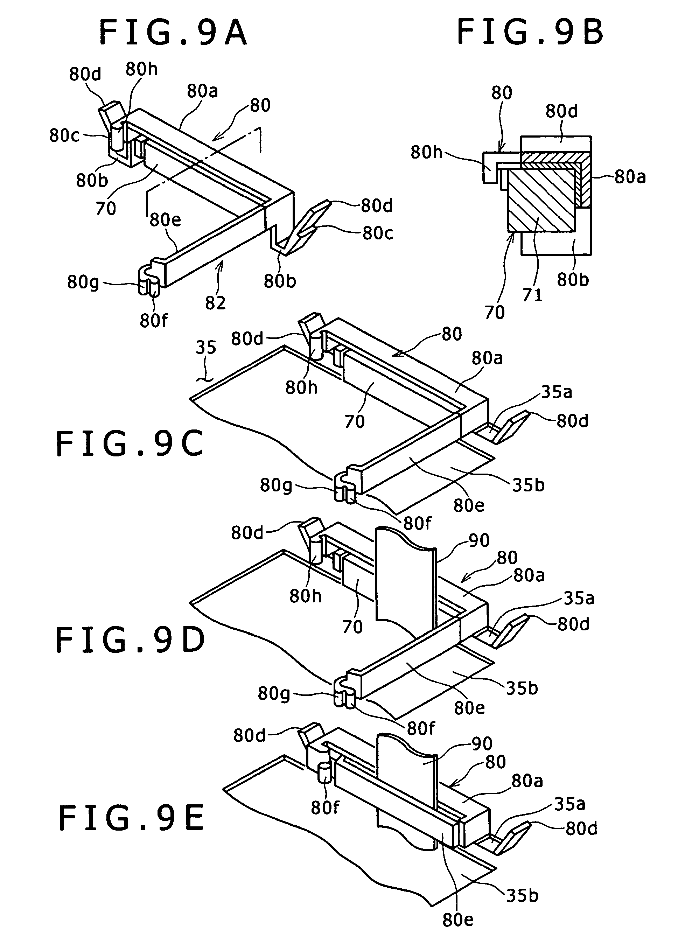

To the cable clamp 80 configured in this manner, a conductive elastic member 70 is adhered by means of a double-sided adhesive tape as seen in FIGS. 9A and 9B. The conductive elastic member 70 is formed from a foamed member 71 in the form of a parallelepiped and conductive cloth which covers an outer periphery of the foamed member 71.

The cable clamp 80 on which the conductive elastic member 70 is provided is secured to the latching holes 35a of the shield metal plate 35 as seen FIG. 9C. Then, the conductive elastic member 70 is crushed between the body 80a of the cable clamp 80 and the shield metal plate 35 and closely contacted with the shield metal plate 35 to establish electric connection.

Then, a flexible wiring board 90 is extracted from an opening 35b of the shield metal plate 35 in the proximity of the thus secured cable clamp 80 and clamped by the body 80a and the clamp 80e with the conductive elastic member 70 interposed therebetween as seen in FIGS. 9D and 9E so that the flexible wiring board 90 can be secured without play.

Particularly, in the optical unit 4 in the present embodiment, the R flexible cable 31, G flexible cable 32 and B flexible cable 33 extending from the liquid crystal panel are used as the flexible wiring board 90 as seen in FIGS. 4 to 8D. Then, since a high frequency is used by the liquid crystal panel control board 36, a grounding metal wire for connecting to a ground line is provided on one surface side of the flexible cables 31, 32 and 33 as a countermeasure for the EMC which has electromagnetic incoherence and resistance. Then, by providing the side of the flexible cables 31, 32 and 33 on which the grounding metal wiring lines are provided on the rear face side of the cable shown in FIGS. 9D and 9E, that is, on the side which contacts with the conductive elastic member 70, the flexible cables 31, 32 and 33 can be electrically connected to the shield metal plate 35 and can be grounded thereby.

In the cable clamp 80 having such a configuration as described above, the two upper and lower faces of the conductive elastic member 70 having a parallelepiped shape are held between and secured by the body 80a and the shield metal plate 35 as seen in FIG. 9C. Further, two other faces of the cable clamp 80 are held between and secured by the body 80a and the flexible wiring board 90 on the clamp 80e side as seen in FIGS. 9D and 9E.

Thus, the shield metal plate 35 and the ground lines formed on one end face of the flexible cables 31, 32 and 33 can be electrically connected to each other. Then, the liquid crystal panel control board 36 is covered with the shield metal plate 35 and the covers 51, 52 and 53 so that electromagnetic waves generated from the shield metal plate 35 may not have an influence on the other apparatus and the liquid crystal panel control board 36 may not malfunction due to external electromagnetic waves.

Further, since whether grounding between the shield metal plate 35 and the flexible cables is required can be selectively determined readily depending upon whether or not the conductive elastic member 70 is present, grounding of individual apparatus can be performed rapidly.

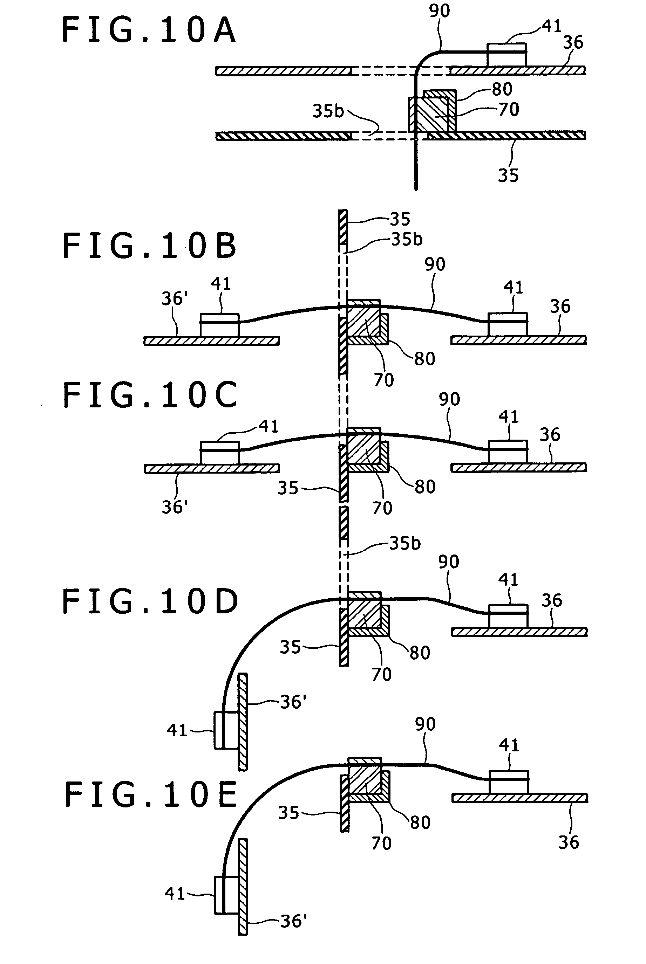

Furthermore, the conductive elastic member 70 is formed in a large size such that, when the clamp 80e of the cable clamp 80 is closed, the flexible cables are secured in such a manner as to overhang the opening 35b of the shield metal plate 35. Consequently, the flexible cables can be secured without any play without provision of a bush or a grommet which is a protective member usually provided for a wiring line threading portion such as the opening of the shield metal plate 35 (refer to FIG. 10A).

FIGS. 10A to 10E show various forms of the cable clamp 80 provided on the shield metal plate 35, a connector 41 provided on the liquid crystal panel control board 36 and the flexible wiring board 90 electrically connected to the connector 41 and secured without any play to the cable clamp 80. FIG. 10A shows the attachment state in the present embodiment shown in FIG. 9E. In particular, in the attachment state of FIG. 10A in the present embodiment, the shield metal plate 35 and the liquid crystal panel control board 36 are disposed substantially in parallel to each other. Further, the flexible wiring board 90 is introduced from below into and extend through the shield metal plate 35 and the liquid crystal panel control board 36 and is connected to the connector 41.

In the attachment state of FIG. 10B, the shield metal plate 35 is disposed in a vertical direction so as to be extend orthogonally to the liquid crystal panel control board 36 which is disposed horizontally. Further, the flexible wiring board 90 is provided so as to extend through the opening 35b provided in the shield metal plate 35. In the attachment state of FIG. 10C, the cable clamp 80 is provided at an upper end of the shield metal plate 35 disposed vertically in the arrangement of FIG. 10B.

In the attachment state of FIG. 10D, the liquid crystal panel control board has a divisional structure, and the liquid crystal panel control board 36' is disposed orthogonally to the liquid crystal panel control board 36, and the flexible wiring board 90 is threaded through the opening 35b provided in the shield metal plate 35.

In FIG. 10E, the cable clamp 80 is provided at an upper end of the shield metal plate 35 disposed vertically in the arrangement of FIG. 10D.

In all arrangements, the face of the conductive elastic member 70 of the cable clamp 80 for securing the flexible wiring board 90 is provided at a position in the space on the opening 35b side or at the upper end of the cable clamp 80. Therefore, the flexible wiring board 90 can be secured without contacting with the shield metal plate 35. Consequently, the flexible wiring board 90 and the shield metal plate 35 can be electrically connected with certainty.

Further, since no excessive stress is applied to the flexible wiring board 90, the flexible wiring board 90 can be connected with a high degree of reliability. Further, whether or not electric connection should be established can be determined depending upon whether or not the conductive elastic member 70 which is secured by a double-sided adhesive tape or the like is provided in the cable clamp 80. Therefore, when a countermeasure is to be taken against the EMC, the flexible wiring board 90 can be secured very advantageously in terms of the time and the cost.

Furthermore, when the flexible wiring board 90 is secured to the cable clamp 80, it can be provided at a position at which it does not contact with the shield metal plate 35. Therefore, the flexible wiring board 90 is protected even if a wiring line protective member such as a grommet is not provided on an end face of the shield metal plate 35.

Now, a mechanism for adjusting an image on the screen 7 is described with reference to FIGS. 3, 7 and 11 to 23D.

As described hereinabove, the optical unit 4 is positioned on and secured to the upper face of the optical device mounting plate 14 through the base block 23 as seen in FIGS. 3 and 7. The optical device mounting plate 14 is provided for contact with an adjustment plate 17 which is provided for sliding movement on a base plate 11 on the bottom face side of the bottom frame 8 of the bottom cabinet 3 which is formed in a substantially "u" shape.

In the following, the optical device mounting plate 14, adjustment plate 17 and base plate 11 are described.

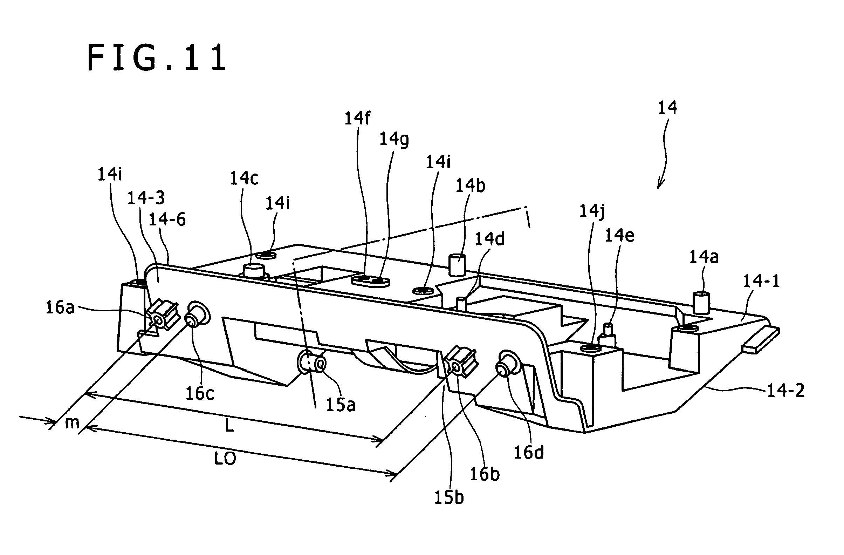

First, the optical device mounting plate 14 is described with reference to FIGS. 11 to 13.

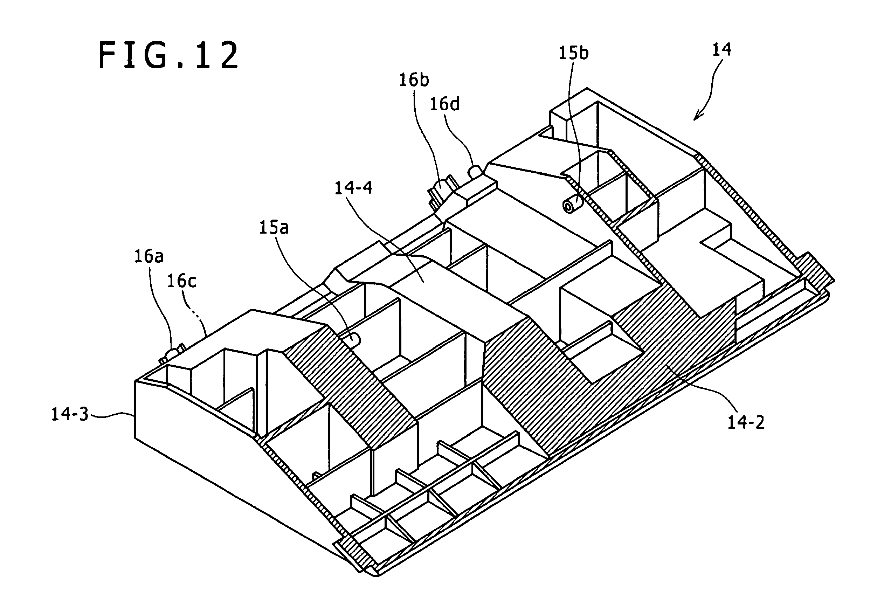

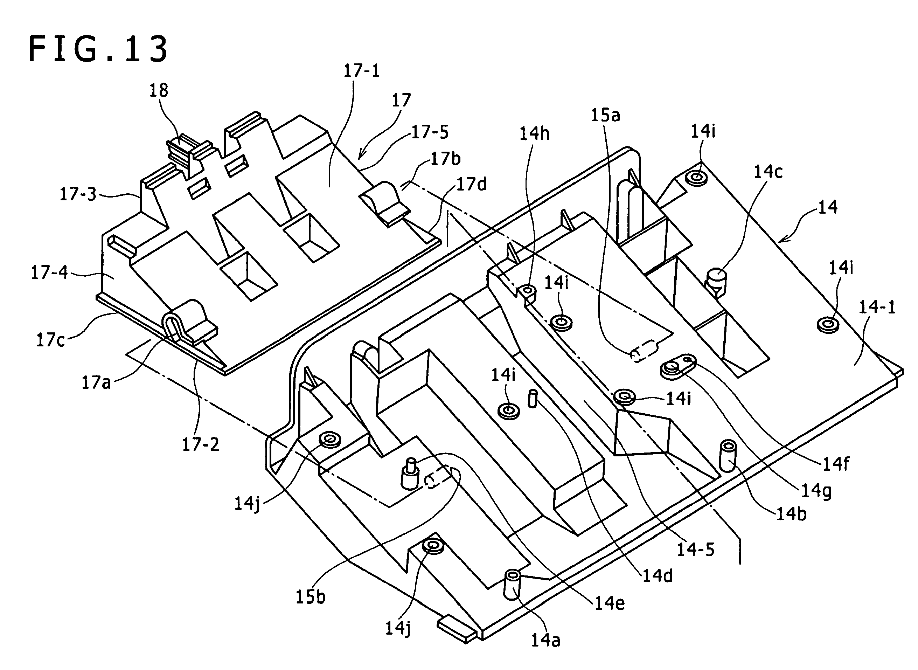

FIGS. 11 to 13 show the optical device mounting plate 14 in perspective. Particularly, FIG. 11 shows only the optical device mounting plate 14 as viewed from an eye point similar to that in FIG. 3, and FIG. 12 shows the optical device mounting plate 14 in an inverted state. Meanwhile, FIG. 13 shows the optical device mounting plate 14 and the adjustment plate 17.

The optical device mounting plate 14 is produced with a small thickness by molding of a plastic resin as seen in FIGS. 11 to 13. In particular, a plurality of recesses are formed on an upper face 14-1 of the optical device mounting plate 14 shown in FIG. 11 while a plurality of projections corresponding to the recesses of the upper face 14-1 are formed on a lower face of the optical device mounting plate 14 shown in FIG. 12. Further, ribs are disposed between the projections so that the optical device mounting plate 14 may have a sufficiently high rigidity while it is light in weight.

The optical device mounting plate 14 is formed such that the upper face 14-1 exhibits an inclination of, for example, approximately 21° with respect to the bottom face 14-2 shown in FIG. 11. Further, a plurality of positioning pins and screw insertion holes for positioning and securing the projection lens 5 and the base block 23 are provided on the upper face 14-1 as seen in FIGS. 11 and 13.

In particular, the optical unit 4 including the projection lens 5 is positioned and secured by three columnar projections 14a, 14b and 14h having a screw insertion hole formed thereon, another columnar projection 14c, two larger and smaller positioning holes 14f and 14g provided at a pedestal portion having a substantially egg shape, two positioning pins 14d and 14e and five screw insertion holes 14i, all provided on the optical device mounting plate 14 shown in FIG. 13.

Here, the columnar projection 14c and the hole 14f of the smaller diameter at the pedestal portion having a substantially egg shape position the projection lens 5 at a predetermined position. The hole 14g of the larger diameter at the pedestal portion of a substantially egg shape and the two positioning pins 14d and 14e position the base block 23 at a predetermined position. Then, the base block 23 is secured to the optical device mounting plate 14 by means of five screw insertion holes 14i and screw insertion holes provided on the three columnar projections 14a, 14b and 14h.

Meanwhile, the optical filter unit 21 is secured to the optical device mounting plate 14 by means of two screw insertion holes 14j provided at a left end portion in FIG. 13 of the upper face 14-1 of the optical device mounting plate 14.

Meanwhile, two engaging projections 15a and 15b having a substantially cylindrical shape are provided in an opposing relationship to each other with a groove 14-5 interposed therebetween as indicated by FIG. 12 and broken lines in FIG. 13 on the lower face side of the optical device mounting plate 14. The engaging projections 15a and 15b are formed in the proximity of the bottom face 14-2 as seen in FIG. 12.

Then, a face 14-4 provided by the bottom face of the groove 14-5 shown in FIG. 13 is formed such that it extends substantially in parallel to the upper face 14-1 and has a height from the upper face 14-1 lower than that of the engaging projections 15a and 15b as seen in FIG. 12.

Further, projections 16a and 16b having reinforcing ribs and positioning projections 16c and 16d having a substantially cylindrical shape are provided on a rear face plate 14-3 of the optical device mounting plate 14 as seen in FIG. 11. The projections 16a and 16b with ribs and the positioning projections 16c and 16d are disposed such that the central positions thereof may be substantially in parallel to an upper end face 14-6 of the rear face plate 14-3 and that the dimension between the projections 16a and 16b with ribs is L and the dimension between the positioning projections 16c and 16d is L0 while the distance between the projections 16a and 16c has a dimension m.

The dimensions here may be, for example, L = 179 mm, L0 = 188 mm, and m = 17 mm.

It is to be noted that, while particular description is hereinafter given, the optical device mounting plate 14 is positioned at a bottom wall 12 by the projection 16c on the left side and the projection 16d on the right side shown in FIG. 11 and is secured at a position rotated by a predetermined amount by the projection 16b with ribs on the right side by the projection 16a with ribs on the left side shown in FIG. 11. At this time, the rotation of the optical device mounting plate 14 with respect to the bottom wall 12 is provided by elastic distortion of the rear face plate 14-3 molded using a resin.

The adjustment plate 17 is produced in a substantially wedge-like shape by molding of a plastic resin. The adjustment plate 17 is formed such that an upper face 17-1 thereof shown in FIG. 13 is inclined, for example, approximately by 21° with respect to a lower face 17-2 thereof. Recesses are formed on the upper face 17-1 while projections corresponding to the recesses on the upper face 17-1 are formed on the lower face 17-2 and ribs are disposed between the projections so as to assure sufficient rigidity while the weight is low.

Projections 17c and 17d in the form of a thin plate are provided at a lower end of side faces 17-4 and 17-5 of the adjustment plate 17, and further, engaging grooves 17a and 17b are provided. The center lines of the engaging grooves 17a and 17b are inclined, for example, by approximately 30° with respect to the lower face 17-2. Thus, the inclination angle of the engaging grooves 17a and 17b is greater than the inclination angle of the upper face 17-1. The projections 17c and 17d are formed such that, when the adjustment plate 17 is engaged with the optical device mounting plate 14, the engaging projections 15a and 15b of the optical device mounting plate 14 can be smoothly accepted therein. The projections 17c and 17d have a thickness of approximately 1 mm.

A rear face 17-3 of the adjustment plate 17 is formed in such a manner as to extend substantially orthogonally to the lower face 17-2 as seen in FIG. 13, and a projection 18 having reinforcing ribs is provided uprightly at an upper portion of the rear face 17-3.

The adjustment plate 17 has a guide projection not shown provided on the lower face 17-2 thereof.

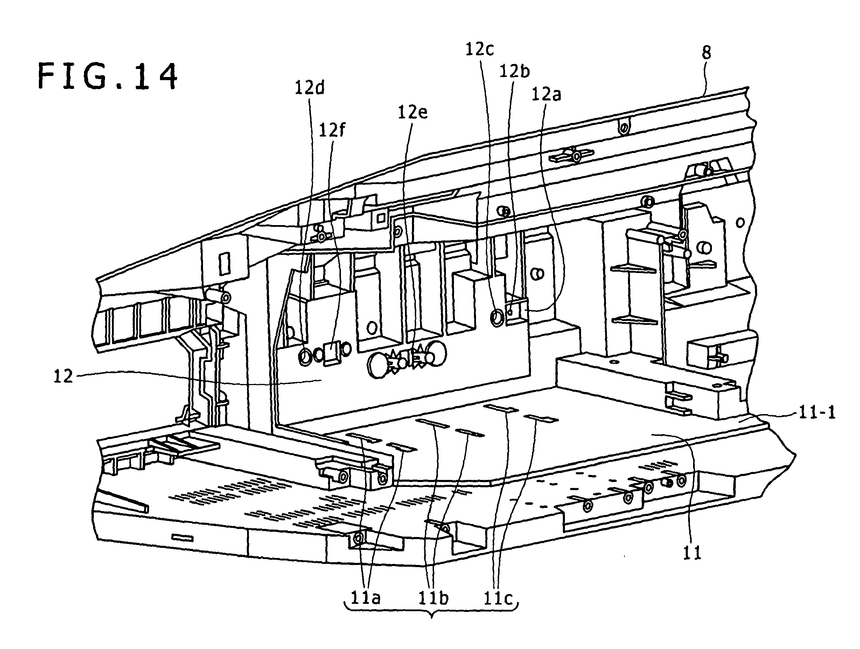

Referring to FIG. 14, the base plate 11 is given as a bottom wall in a region of the bottom frame 8, produced with a small thickness by molding of a plastic resin, to which the adjustment plate 17 is assembled, or in other words, as a bottom wall in a region of the bottom frame 8 wherein the optical unit 4 is carried through the optical device mounting plate 14 and the adjustment plate 17.

In this region, the bottom wall 12 which is part of the bottom frame 8 and forms a wall face is formed in an intersecting relationship with an upper face 11-1 of the base plate 11.

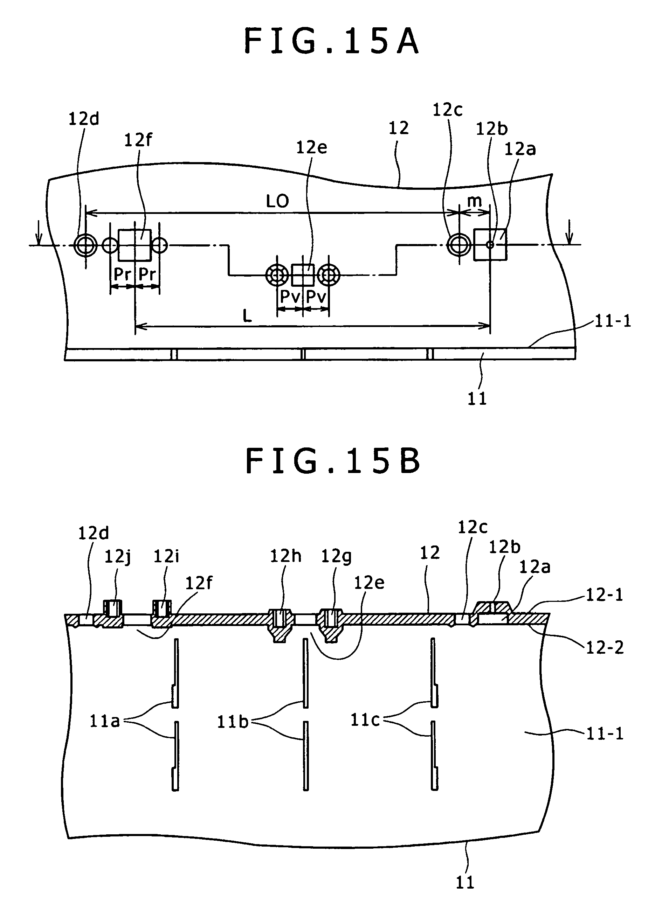

The base plate 11 and the bottom wall 12 in the region in which the optical unit 4 is carried are schematically shown in FIGS. 15A and 15B. It is to be noted that FIG. 15B is a plan view of a cross section taken along an alternate long and short dash line of the bottom wall 12 shown in FIG. 15A as viewed in the direction indicated by arrow marks.

Three pairs of elongated guide holes 11a, 11b and 11c having different shapes from each other are formed in the upper face 11-1 of the base plate 11 such that the center lines thereof extend perpendicularly to the bottom wall 12. The elongated guide holes 11a, 11b and 11c are engaged with guide projections not shown formed on the lower face 17-2 of the adjustment plate 17 so that the adjustment plate 17 can slidably move on the base plate 11 without coming out from within a predetermined range of movement (refer to FIG. 7).

Referring to FIGS. 14, 15A and 15B, the bottom wall 12 has an opening 12e and two threaded holes 12g and 12h provided such that the centers thereof are positioned at the same height from the upper face 11-1 of the base plate 11. Further, the bottom wall 12 has a recessed portion 12a having a screw insertion hole 12b, an opening 12f, two positioning holes 12c and 12d and two threaded holes 12i and 12j provided such that the centers thereof are positioned at the same height.

The centers of the recessed portion 12a having the screw insertion hole 12b, the opening 12f, the two positioning holes 12c and 12d and the two threaded holes 12i and 12j are positioned at the height nearer to an upper face 12-1 of the base plate 11 when compared with the centers of the opening 12e and the threaded holes 12g and 12h.

The opening 12e has a substantially rectangular shape of a size into which the projection 18 with ribs provided on the rear face 17-3 of the adjustment plate 17 can be fitted with a sufficient margin. Further, for the threaded holes 12g and 12h, large projections are provided on a rear face 12-2 side so that the portions of the bottom wall 12 at which the threaded holes 12g and 12h are provided may not project by a great amount. Furthermore, ribs for reinforcing the projections are provided.

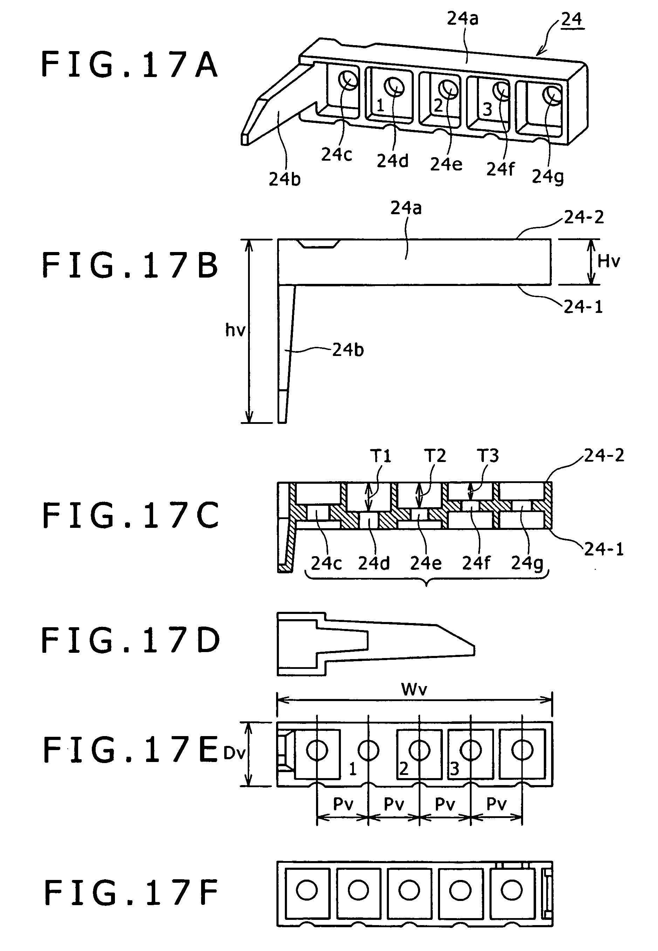

The pitch dimensions between the centers of the threaded hole 12g and the opening 12e and between the centers of the opening 12e and the threaded hole 12h is equal to a pitch Pv shown in FIG. 17E of the thread insertion holes 24c to 24g of the V adjustment piece 24 hereinafter described.

Referring to FIG. 15A, the dimension between the centers of the screw insertion hole 12b and the opening 12f provided on the recessed portion 12a is L and the dimension between the centers of the positioning holes 12c and 12d is L0 while the dimension between the centers of the screw insertion hole 12b and the positioning hole 12c is m.

The recessed portion 12a is formed by extruding part of the bottom wall 12 from the rear face 12-2 side toward the upper face 12-1 side into a rectangular recess. The recessed portion 12a has a size with which an end portion of the projection 16a with ribs of the optical device mounting plate 14 shown in FIG. 11 can be accommodated in the recessed portion 12a, and the screw insertion hole 12b is formed at a substantially central position of the recessed portion 12a.

The opening 12f has a substantially rectangular shape with a size sufficient to allow the projection 16b with ribs provided on the rear face plate 14-3 of the optical device mounting plate 14 shown in FIG. 11 to be fitted in the opening 12f.

The positioning holes 12c and 12d are round holes formed in the bottom wall 12, and the positioning projections 16c and 16d of the optical device mounting plate 14 can be engaged with the positioning holes 12c and 12d, respectively.

In short, the projections 16a and 16b with ribs of the rear face plate 14-3 of the optical device mounting plate 14 shown in FIG. 11 correspond to the recessed portion 12a and the opening 12f, and the positioning projections 16c and 16d are engaged with the two positioning holes 12c and 12d, respectively.

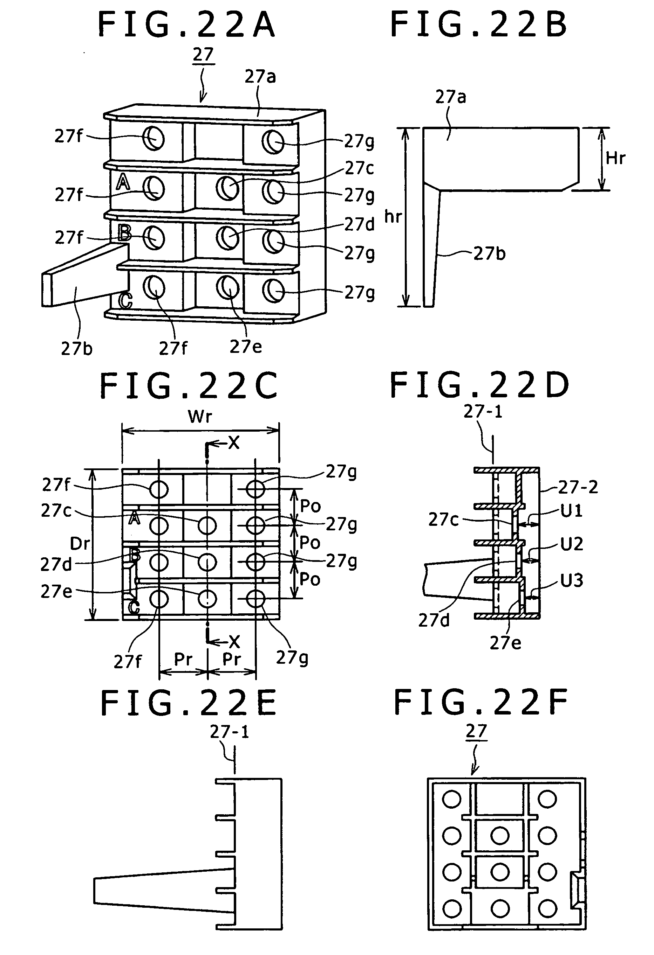

The threaded holes 12i and 12j are formed such that the portions at which they are formed are provided so as to project to the upper face 12-1 side of the bottom wall 12. Further, the pitch dimension between the centers of the threaded hole 12i and the opening 12f and between the centers of the opening 12f and the threaded hole 12j is the pitch Pr shown in FIG. 22C of the screw insertion holes 27c to 27g of the R adjustment piece 27 hereinafter described.

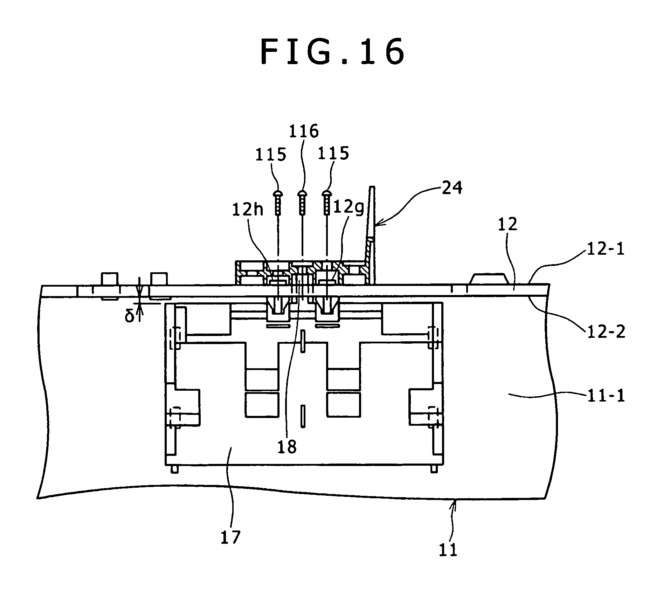

FIG. 16 shows the adjustment plate 17 slidably moved toward the bottom wall 12 after it is placed on the base plate 11 such that guide projections not shown provided on the lower face of the adjustment plate 17 may be engaged with the elongated guide holes 11a, 11b and 11c of the base plate 11 shown in FIG. 15B. At this time, the projection 18 with ribs of the rear face 17-3 of the adjustment plate 17 is fitted from the rear face 12-2 side into the opening 12e formed in the bottom wall 12 and projects and is exposed at an end portion thereof to the upper face 12-1 side.

In the rear projection display apparatus of the present embodiment, the dimension of the end portion of the projection 18 with ribs of the rear face 17-3 of the adjustment plate 17 which projects toward the upper face 12-1 side is adjusted by means of the V adjustment piece 24.

FIGS. 17A to 17F show the configuration of the V adjustment piece 24 shown in FIG. 2. FIGS. 17A, 17B, 17C, 17D, 17E and 17F are a perspective view, a plan view, a sectional plan view, a left side elevational view, a front elevational view and a rear elevational view, respectively, of a V adjustment piece.

Referring to FIGS. 17A to 17F, the V adjustment piece 24 is produced by injection molding or the like of a hard plastic resin and includes, as particularly seen from FIG. 17A, a body 24a having a plurality of screw insertion holes formed therein, and a knob 24b provided uprightly in the body 24a. The body 24a is a short tubular shape having a rectangular cross section. The inside of the tube is partitioned into five portions by four partition plates. A bottom plate of a substantially rectangular shape in which the screw insertion holes are formed is provided integrally with the individual partitions. The five screw insertion holes 24c, 24d, 24e, 24f and 24g provided in this manner are formed such that they have a substantially equal diameter and the centers thereof are juxtaposed in a spaced relationship by distances of an equal pitch (Pv).

Then, for example, as seen in FIG. 17A, "number 1" is applied to the second screw insertion hole 24d from the left side; "number 2" is applied to the third screw insertion hole 24e; and "number 3" is applied to the fourth screw insertion hole 24f. In other words, the screw insertion hole 24d whose depth from the bottom face 24-2 to the bottom plate is T1 is coordinated with the "number 1"; the screw insertion hole 24e whose depth is T2 is coordinated with the "number 2"; and the screw insertion hole 24f whose depth is T3 is coordinated with the "number 3".

A general size of the V adjustment piece 24 in the present embodiment may be such as given just below. In particular, the height Hv of the body 24a shown in FIG. 17B is Hv = 11 mm; the height hv to the end of the knob 24b is hv = 48 mm; the depths T1, T2 and T3 shown in FIG. 17C are T1 = 9.4 mm, T2 = 6.9 mm and T3 = 4.4 mm, respectively; the width Wv of the body 24a shown in FIG. 17E is Wv = 70 mm; the depth Dv of the body 24a is Dv = 17 mm; the hole pitch Pv of the body 24a is Pv = 13 mm; and the hole diameter of the body 24a is 4.5 mm.

Now, attachment of the adjustment plate 17 to the base plate 11 and the bottom wall 12 performed using the V adjustment piece 24 formed in such a manner as described above is described. Here, the attachment is described taking an example wherein the V adjustment piece 24 and the projection 18 with ribs are secured through the screw insertion hole 24e of the "number 2" at the center of the V adjustment piece 24.

First, the projection 18 with ribs of the back face 17-3 of the adjustment plate 17 is fitted into the opening 12e shown in FIG. 15B until it projects from the upper face 12-1 side as seen in FIG. 16.

Then, a screw 116 is fitted into the screw insertion hole 24e of the "number 2" of the V adjustment piece 24 to secure the V adjustment piece 24 and the projection 18 with ribs. At this time, while the adjustment plate 17 is in a state wherein it can move a little on the base plate 11, the state wherein the bottom face 24-2 of the V adjustment piece 24 contacts with the bottom wall 12 provides a predetermined position of the adjustment plate 17.

Then, in order to secure the adjustment plate 17 at the predetermined position, fastening screws 115 are inserted into the screw insertion holes 24d and 24f of the V adjustment piece 24 and the threaded holes 12g and 12h of the bottom wall 12.

Consequently, the gap δ shown in FIG. 16 between the bottom wall 12 and the rear face 17-3 of the adjustment plate 17 becomes equal to the depth T2 of the "number 2" of the V adjustment piece 24.

In other words, since the depths T1, T2 and T3 of the V adjustment piece 24 in the present embodiment have the relationship of T1 > T2 > T3 as described hereinabove, at the depth T1 of the "number 1", the end portion of the projection 18 with ribs of the adjustment plate 17 projects by the greatest amount from the opening 12e. Consequently, the adjustment plate 17 is secured such that the dimension of the gap δ is smallest among the three depths T1, T2 and T3. On the other hand, at the depth T3 of the "number 3", the end portion of the projection 18 with ribs of the adjustment plate 17 projects by the smallest amount from the opening 12e. Consequently, the adjustment plate 17 is secured such that the dimension of the gap δ is greatest.

Then, the end portion of the projection 18 with ribs of the adjustment plate 17 with respect to the upper face 12-1 of the bottom wall 12 is positioned so that the depth corresponding to one of the numbers 1 to 3 is obtained.

In the following, a mechanism for adjusting a projected image on the screen 7 in the upward or downward direction is described with reference to FIGS. 1 and 18A to 20C.

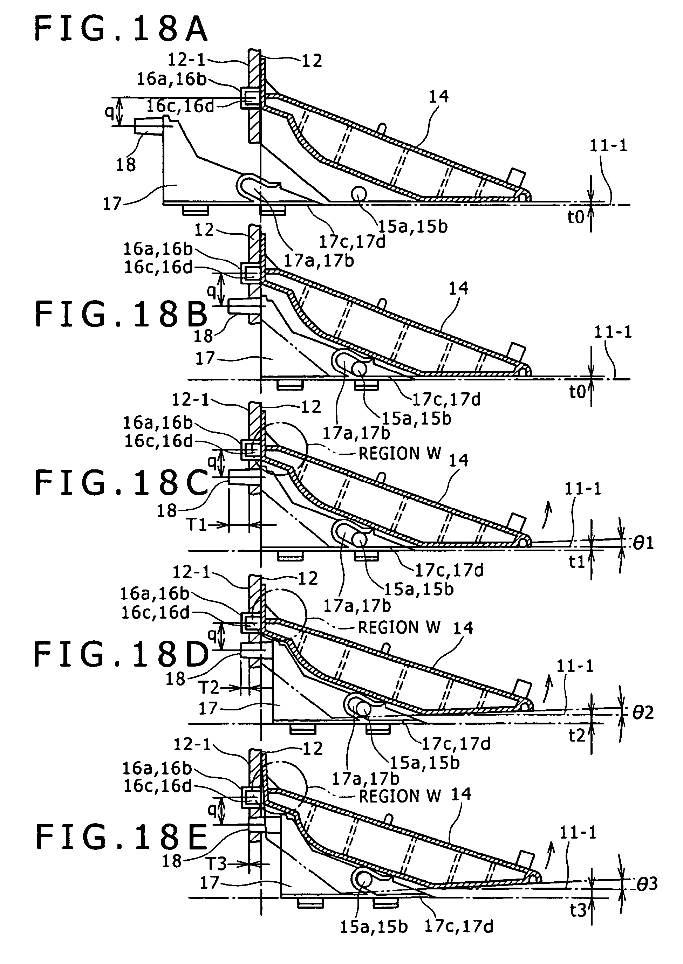

In particular, the optical device mounting plate 14 is secured to the bottom wall 12, and in this state, the relative position of the adjustment plate 17 located below the optical device mounting plate 14 with respect to the bottom wall 12 is varied to vary the gap δ described above. The angle of the inclined upper face 14-1 of the optical device mounting plate 14 is varied by the variation of the relative position of the adjustment plate 17. Thus, the variation of the relative position is described with reference to FIGS. 18A to 18E.

FIGS. 18A to 18E illustrate the angular variation when the engaging grooves 17a and 17b of the adjustment plate 17 approach the engaging projections 15a and 15b provided on the lower face side of the optical device mounting plate 14 shown in FIG. 11 from the rear side shown in FIGS. 18A to 18E until they are engaged with the engaging projections 15a and 15b (FIG. 13), respectively.

Here, the optical device mounting plate 14 is secured to the bottom wall 12, and the adjustment plate 17 slidably engage, at guide projections 17f provided on the lower face 17-2 thereof, with the elongated guide holes 11a, 11b and 11c of the base plate 11. In other words, since the adjustment plate 17 moves on the base plate 11, the distance q in the heightwise direction between the centers of the positioning projections 16c and 16d of the rear face plate 14-3 shown in FIG. 11 of the optical device mounting plate 14 and the center of the projection 18 with ribs of the adjustment plate 17 is fixed.

Then, the bottom face 14-2 of the optical device mounting plate 14 is secured to the bottom wall 12 such that the gap t0 between the bottom face 14-2 and the base plate 11 may be t0 ≒ 1 mm as seen in FIG. 18A in which the bottom face 14-2 is not in contact with the adjustment plate 17.

FIG. 18B shows the adjustment plate 17 in a state wherein it advances toward the left side in FIG. 18B to a position at which the rear face plate 14-3 of the optical device mounting plate 14 and the rear face 17-3 of the adjustment plate 17 are registered with each other and the engaging grooves 17a and 17b are engaged with the engaging projections 15a and 15b of the optical device mounting plate 14, respectively.

At this time, the engaging projections 15a and 15b of the optical device mounting plate 14 slip on the projections 17c and 17d without any resistance because the gap t0 is t0 = 1 mm and the depth of the projections 17c and 17d of the adjustment plate 17 is 1mm. Consequently, the engaging projections 15a and 15b are disposed at a position of the entrance of the inclined portions of the engaging grooves 17a and 17b, respectively.

In other words, the gap between the bottom face 14-2 of the optical device mounting plate 14 and the base plate 11 is substantially equal to t0 and is not influenced by the movement of the adjustment plate 17.

FIG. 18C shows the adjustment plate 17 in a state wherein the projection 18 with ribs thereof is positioned at a position at which it project by the dimension T1 from the face of the bottom wall 12.

At this time, the engaging projections 15a and 15b of the optical device mounting plate 14 enter the inclined portions of the engaging grooves 17a and 17b of the adjustment plate 17, respectively. Then, the optical device mounting plate 14 is pivoted a little in the counterclockwise direction indicated by an arrow mark in FIG. 18C around a fixed end provided by the region W in the proximity of the projections 16a and 16b with ribs shown in FIG. 11. Thus, the gap between the optical device mounting plate 14 and the base plate 11 becomes t1 (t1 > t0) and the angle between the optical device mounting plate 14 and the base plate 11 becomes ϕ1.

FIG. 18D shows the adjustment plate 17 in a state wherein the projection 18 with ribs thereof is disposed at a position at which it projects by the dimension T2 from the face of the bottom wall 12.

At this time, the engaging projections 15a and 15b of the optical device mounting plate 14 enter the center of the inclined portions of the engaging grooves 17a and 17b of the adjustment plate 17, respectively. Then, the optical device mounting plate 14 is further pivoted in the counterclockwise direction indicated by the arrow mark in FIG. 18D around the fixed end provided by the region W in the proximity of the projections 16a and 16b with ribs. Thus, the gap between the optical device mounting plate 14 and the base plate 11 becomes t2 (t2 > t1) and the angle between the optical device mounting plate 14 and the base plate 11 becomes ϕ2 (ϕ2 > ϕ1).

FIG. 18E shows the adjustment plate 17 in a state wherein the projection 18 with ribs thereof is disposed at a position at which it projects by the distance T3 from the face of the bottom wall 12.

At this time, the engaging projections 15a and 15b of the optical device mounting plate 14 enter the substantially upper end of the inclined portions of the engaging grooves 17a and 17b of the adjustment plate 17, respectively. Then, the optical device mounting plate 14 is further pivoted in the counterclockwise direction indicated by the arrow mark in FIG. 18E around the fixed end provided by the region W in the proximity of the projections 16a and 16b with ribs. Thus, the gap between the optical device mounting plate 14 and the base plate 11 becomes t3 (t3 > t2) and the angle between the optical device mounting plate 14 and the base plate 11 becomes ϕ3 (ϕ3 > ϕ2).

By adjusting the dimension by which the projection 18 with ribs of the adjustment plate 17 projects from the upper face 12-1 of the bottom wall 12 in this manner, the optical device mounting plate 14 can be pivoted around the fixed end provided by the region W in the proximity of the projections 16a and 16b with ribs and the positioning projections 16c and 16d thereof thereby to adjust the gap between and the angle defined by the optical device mounting plate 14 and the base plate 11.

In other words, since the bottom cabinet 3 including the bottom wall 12 and the optical device mounting plate 14 are formed like a plate by molding of a plastic resin, the bottom wall 12 and the rear face plate 14-3 of the optical device mounting plate 14 have elasticity against deformation.

Then, when lifting force is applied to the optical device mounting plate 14 by a change of the position of the adjustment plate 17, the bottom wall 12 and the optical device mounting plate 14 are deformed a little such that the free end side of the optical device mounting plate 14 is pivoted upwardly.

Therefore, it is possible to adjust the optical axis of the projection lens 5 of the optical unit 4 carried on the optical device mounting plate 14 within a plane within which the bottom wall 12 and the base plate 11 are disposed perpendicularly to each other thereby to adjust the image to be projected on the screen 7 shown in FIG. 1 in the upward or downward direction.

Now, a method wherein the adjustment of the projecting dimension of the projection 18 with ribs of the adjustment plate 17 from the upper face 12-1 of the bottom wall 12 is performed by means of the V adjustment piece 24 shown in FIG. 2 is described with reference to FIGS. 2 and 17A to 20C.

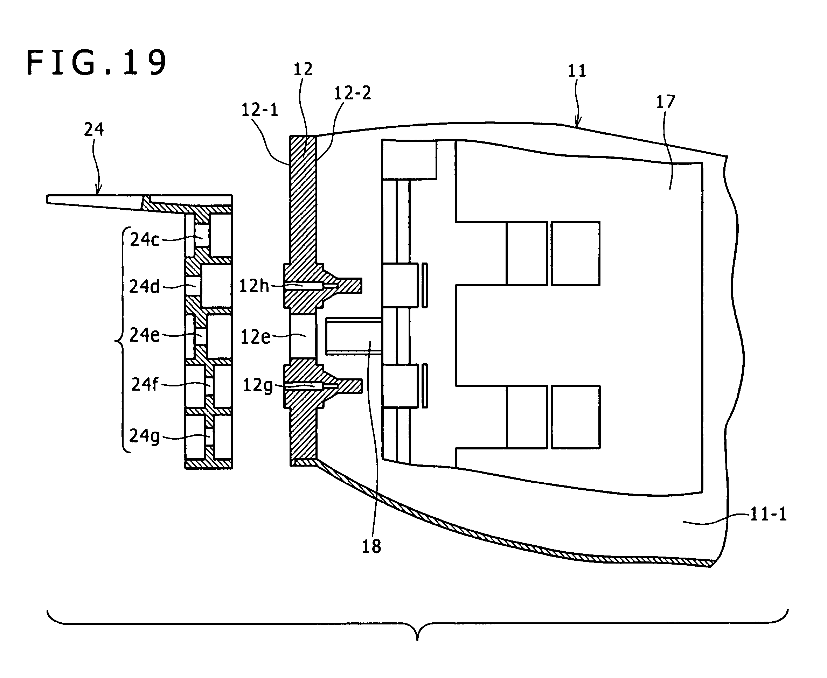

FIG. 19 shows the adjustment plate 17 placed on the base plate 11 in a state immediately before it is moved to the predetermined position of the bottom wall 12 and before the V adjustment piece 24 is secured.

At the predetermined position, the projection 18 with ribs of the rear face 17-3 of the adjustment plate 17 can be fitted into the opening 12e of the bottom wall 12. Then, fastening screws are fitted into and secured to three ones of the thread insertion holes 24c to 24g of the V adjustment piece 24 shown in FIG. 17 so as to correspond to the threaded hole 12g, opening 12e and threaded hole 12h of the bottom wall 12.

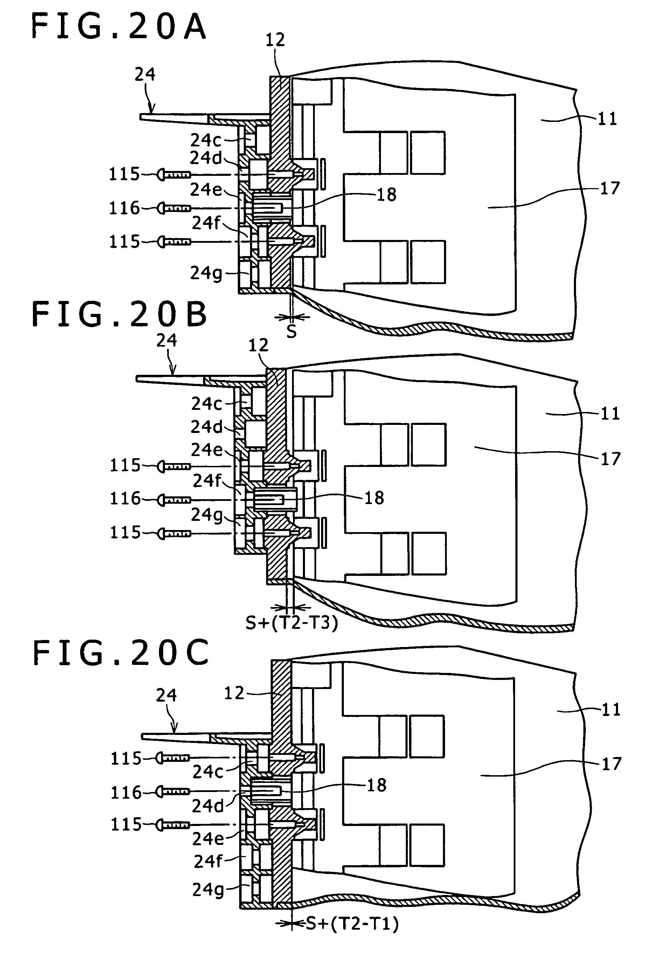

FIGS. 20A to 20C illustrate adjustment of the projecting dimension of the projection 18 with ribs of the adjustment plate 17 from the upper face 12-1 of the bottom wall 12 by means of the V adjustment piece 24 shown in FIG. 17.

FIG. 20A illustrates a state wherein a fastening screw is fitted through the screw insertion hole 24e corresponding to the "number 2" of the V adjustment piece 24 into the threaded hole of the projection 18 with ribs of the adjustment plate 17 until the V adjustment piece 24 is secured. Further, the V adjustment piece 24 is secured to the bottom wall 12 through the screw insertion holes 24d and 24f on the opposite sides of the screw insertion hole 24e and the threaded holes 12g and 12h of the bottom wall 12.

At this time, the gap between the bottom wall 12 and the rear face 17-3 of the adjustment plate 17 is the dimension s which corresponds to the depth T2 of the "number 2" shown in FIG. 17C.

FIG. 20B shows another state wherein the screw insertion hole 24f of the V adjustment piece 24 which corresponds to the "number 3" is used to secure the V adjustment piece 24 to the adjustment plate 17. Further, the holes 24e and 24g on the opposite sides of the screw insertion hole 24f and the threaded holes 12g and 12h of the bottom wall 12 are used to secure the V adjustment piece 24 to the bottom wall 12.

At this time, the gap between the bottom wall 12 and the rear face 17-3 of the adjustment plate 17 is the dimension s + (T2 - T3) which corresponds to the depth T3 of the "number 3" shown in FIG. 17C.

FIG. 20C shows another state wherein the screw insertion hole 24d of the V adjustment piece 24 which corresponds to the "number 1" is used to secure the V adjustment piece 24 to the adjustment plate 17. Further, the holes 24c and 24e on the opposite sides of the screw insertion hole 24d and the threaded holes 12g and 12h of the bottom wall 12 are used to secure the V adjustment piece 24 to the bottom wall 12.

At this time, the gap between the bottom wall 12 and the rear face 17-3 of the adjustment plate 17 is the dimension s + (T2 - T1) which corresponds to the depth T1 of the "number 1" shown in FIG. 17C.

In short, the V adjustment piece 24 can be secured to the projection 18 with ribs of the adjustment plate 17 and the V adjustment piece 24 can be secured to the bottom wall 12 to change the position of the adjustment plate 17 with respect to the bottom wall 12 in a corresponding relationship to any of the numbers 1 to 3 of the holes. Therefore, the rear face plate 14-3 of the optical device mounting plate 14 which engages with the adjustment plate 17 can be lifted and inclined with respect to the base plate 11 as seen in FIGS. 18A to 18E.

In other words, any of the three image adjustment positions can be established using the V adjustment piece 24 provided on the front face side of the bottom cabinet 3 shown in FIG. 2 to set a suitable one of the numbers 1 to 3 shown in FIGS. 17C and 17E and one of the depths corresponding to the number to the projecting dimension of the projection 18 with ribs of the adjustment plate 17. Then, by setting the position at which the depth T2 of the screw insertion hole 24e corresponding to the "number 2" as a reference position for design, the gap t1 and the angle ϕ1 shown in FIG. 18C can be set with the depth T1, and the gap t3 and the angle ϕ3 can be set with the depth T3.

Now, a mechanism for adjusting the projected image on the screen 7 substantially around the center of the screen is described with reference to FIGS. 1, 2, 15A and 15B, 18A to 18E and 21A to 23D.

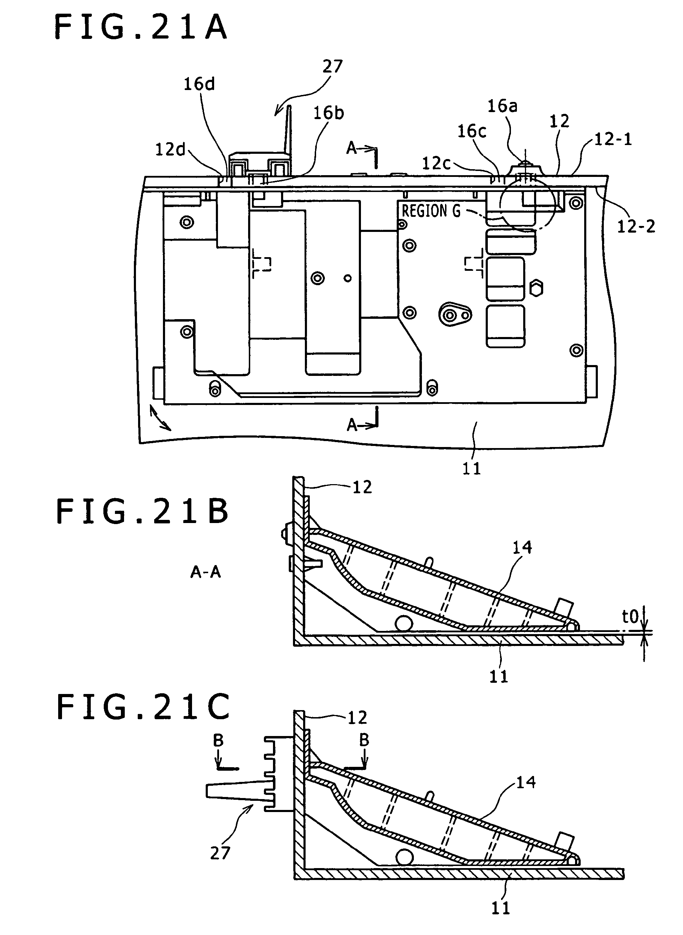

FIG. 21A shows the R adjustment piece 27 provided for adjusting the projected image on the screen substantially around the center of the screen while the positioning holes 12c and 12d shown in FIGS. 15A and 15B provided in the bottom wall 12 and the positioning holes 16c and 16d provided on the rear face plate 14-3 of the optical device mounting plate 14 engage with each other. FIG. 21B is a sectional view taken along line A-A of FIG. 21A and FIG. 21C is a side elevational view of FIG. 21A.

In particular, the projection 16a with ribs which serves as a fixed end of the optical device mounting plate 14 is secured to the recessed portion 12a of the bottom wall 12 shown in FIG. 15B while the other projection 16b with ribs of the optical device mounting plate 14 is secured by the R adjustment piece 27 (FIG. 21C). At this time, as seen in FIG. 21B which indicates a cross section taken along line A-A of FIG. 21A as viewed in the direction indicated by arrow marks, the bottom face 14-2 of the optical device mounting plate 14 has the gap t0 with respect to the base plate 11 (refer to FIG. 18A).

A case wherein, from such a state that the projections 16a and 16b with ribs of the optical device mounting plate 14 are secured to the bottom wall 12 as described above, the R adjustment piece 27 is removed and the projecting amount of the end face of the projection 16b with ribs from the upper face 12-1 of the bottom wall 12 is varied is examined.

It can be recognized that, in this instance, the optical device mounting plate 14 can be pivoted around a fulcrum provided by a region G in the proximity of the fixed end of the optical device mounting plate 14 to the projection 16a with ribs by adjusting the projecting amount of the projection 16b with ribs.

In the present example, the amount of the pivotal motion of the optical device mounting plate 14 is adjusted by means of the R adjustment piece 27 provided from the front face side of the bottom cabinet 3, that is, from the upper face 12-1 of the bottom wall 12 as seen in FIG. 2.

FIGS. 22A to 22F show the shape of the R adjustment piece 27.

Referring first to FIG. 22A, the R adjustment piece 27 is produced by injection molding of a hard plastic resin and includes a body 27a having a plurality of screw insertion holes formed therein, and a knob 27b provided uprightly on the body 27a.

The body 27a has four recessed portions formed in a vertical column substantially at a central portion of an upper face 27-1 shown in FIG. 22E. Four screw insertion holes are formed on the upper face 27-1 on each of the opposite sides of the four recesses while a screw insertion hole is provided also on each of three lower ones of the four recessed portions. Further, a partition plate is provided uprightly on the boundary between each adjacent ones of groups each of which includes three portions juxtaposed with each other horizontally as seen in FIG. 22C.

Here, the holes arranged in the left side vertical column shown in FIG. 22A are denoted by reference character 27f while the holes arranged in the right side vertical column are denoted by reference character 27g, and the holes provided in the recessed portions are denoted by 27c, 27d and 27e. Then, the group of the holes 27f, 27c and 27g disposed on the second partition from above is denoted by "reference character A"; the group of the holes 27f, 27d and 27g disposed on the third partition from above is represented by "reference character B"; and the group of the holes 27f, 27e and 27g disposed on the lowermost partition is represented by "reference character C".

The R adjustment piece 27 in the present embodiment generally has the following size. In particular, the height Hr of the body 24a shown in FIG. 22B is Hr = 17 mm; the height hr to the end of the knob 27b is hr = 48 mm; the width Wr of the body 27a shown in FIG. 22C is Wr = 42 mm; and the depth Dr of the body 27a is Dr = 43 mm. Further, as seen in FIG. 22C, the pitch dimension of the holes 27f and 27g on the opposite sides of the holes 27c, 27d and 27e in the recessed portions is given by Pr, and for example, Pr = 13 mm. Further, the pitch dimension p0 of the screw insertion holes 27c to 27g in the horizontal direction is, for example, p0 = 14.5 mm, and the hole diameter is 4.5 mm.

Further, where the depths of the holes 27c, 27d and 27e of the recessed portions from a bottom face 27-2 of the recessed portions corresponding to the reference characters A to C shown in FIG. 22D are represented by U1, U2 and U3 (U1 > U2 > U3), respectively, for example, U1 = 4.4 mm, U2 = 4.0 mm, and U3 = 3.6 mm.

Attachment of the optical device mounting plate 14 to the bottom wall 12 using the R adjustment piece 27 formed in such a manner as described above is described below with reference to FIGS. 15A and 15B and 21A to 23D.

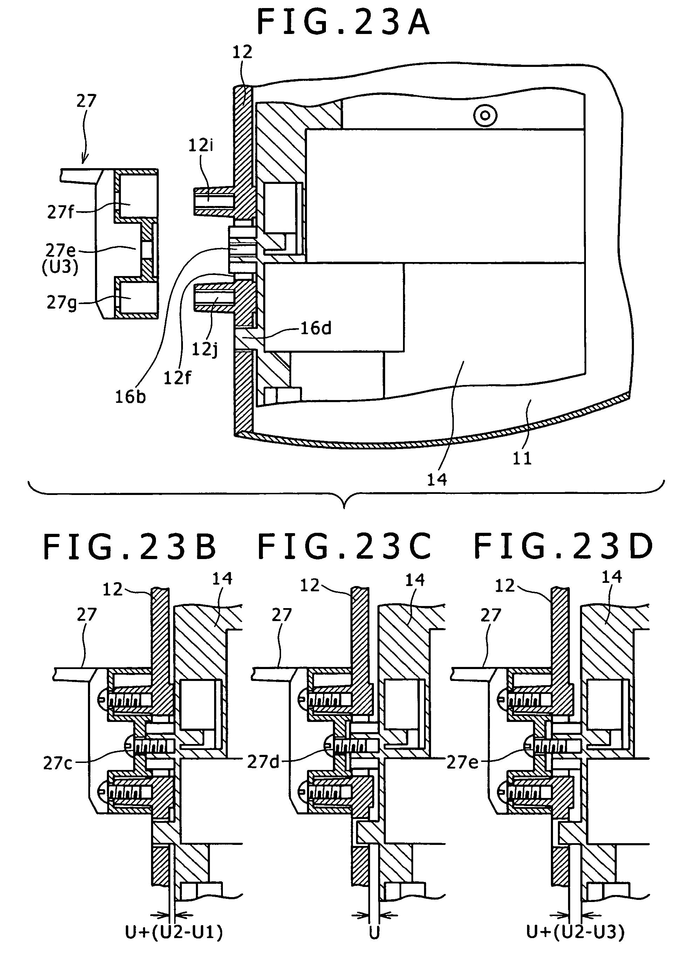

FIGS. 23A to 23D show the projection 16b with ribs and the projection 16d for securing of the optical device mounting plate 14, secured to the bottom wall 12, on the side on which the R adjustment piece 27 is provided and several members around the projection 16b with ribs and the projection 16d taken along line B-B of FIG. 21C as viewed from above.

FIG. 23A shows the optical device mounting plate 14 and the bottom wall 12 immediately before the R adjustment piece 27 is attached. Referring to FIG. 23A, the holes 27f and 27g are disposed in an opposing relationship to the threaded holes 12f and 12j of the bottom wall 12 shown in FIGS. 15A and 15B. For example, the screw insertion hole 27e of the depth U3 corresponding to the reference character C is disposed on the projection 16b with ribs projecting from the opening 12f.

FIG. 23B shows the R adjustment piece 27 a portion of which indicated by the "reference character A" shown in FIG. 22A is attached to the optical device mounting plate 14 and the bottom wall 12. FIGS. 23C and 23D show the R adjustment piece 27 to portions of which indicated by the "reference character B" and the "reference character C" in FIG. 22A are attached, respectively, to the optical device mounting plate 14 and bottom wall 12.

Here, for example, where a state wherein the optical device mounting plate 14 is positioned with respect to the bottom wall 12 corresponding to the "reference character B" shown in FIG. 23C is determined as a reference, if the gap between the bottom wall 12 and the optical device mounting plate 14 in the reference state is represented by u, then the gap corresponding to the "reference character A" shown in FIG. 23B is u + (U2 - U1). Meanwhile, the gap corresponding to the "reference character C" shown in FIG. 23D is u + (U2 - U3).

The projecting amounts of the projection 16b with ribs of the optical device mounting plate 14 from the bottom wall 12 at the three attachment positions corresponding to the reference characters A to C are U1, U2 and U3, respectively. Then, in response to the projecting amount, the optical device mounting plate 14 is pivoted around a fulcrum at a point in the proximity of the region G described hereinabove with reference to FIG. 21A in which the optical device mounting plate 14 and the projection 16a with ribs of the bottom wall 12 are secured to each other.

In other words, the optical axis of the projection lens 5 carried on the optical device mounting plate 14 is rotated but a little.

Here, if the position of the optical device mounting plate 14 at the depth U2 of the hole 27d corresponding to the "reference character B" is set as a reference position in design of the optical axis, then the projected image can be rotated by a predetermined amount in the clockwise direction in FIG. 21A where the depth U1 is used, but can be rotated by the predetermined amount in the counterclockwise direction where the depth U3 is used.

In the rear projection display apparatus having the configuration described above, the adjustment plate 17 is first placed on the base plate 11 and the bottom wall 12 shown in FIG. 14 of the bottom frame 8 of the bottom cabinet 3 shown in FIG. 2. Then, the optical device mounting plate 14 on which the optical unit 4 is carried in advance is assembled such that the engaging projections 15a and 15b of the optical device mounting plate 14 and the engaging grooves 17a and 17b of the adjustment plate 17 are engaged with each other, respectively, as seen in FIG. 7.

Then, the projection 16a with ribs of the optical device mounting plate 14 is secured to the recessed portion 12a of the bottom wall 12, and the other projection 16b with ribs is secured to the R adjustment piece 27, for example, using the hole 27d at the location of the "reference character B", whereafter the R adjustment piece 27 is secured to the bottom wall 12 at the holes 27f and 27g thereof at the location of the "reference character B" as seen in FIGS. 21A to 21C.

Thereafter, the projection 18 with ribs of the adjustment plate 17 is secured, for example, at the screw insertion hole 24e of the "number 2" of the V adjustment piece 24, and then the adjustment plate 17 is secured to the bottom wall 12 at the screw insertion holes 24d and 24f on the opposite sides of the screw insertion hole 24e.

Then, various components such as a light source, a cooling fan and a power supply unit are accommodated into the bottom frame 8. Then, the covers 51, 52 and 53 are mounted on the optical unit 4, and the mesh cover 9 is attached thereby to assemble the bottom cabinet 3 as seen in FIG. 2.

Finally, the top cabinet 2 assembled in advance and to be provided at an upper location is mounted from above onto and secured to the bottom cabinet 3 thereby to assemble the rear projection display apparatus of the present embodiment.

With the rear projection display apparatus configured in such a manner as described above, if the securing between the projection 18 with ribs of the adjustment plate 17 and the V adjustment piece 24 is changed by changing the screw insertion hole of the V adjustment piece 24 from that of the "number 2" to the screw insertion hole 24e of the "number 1" and then the V adjustment piece 24 is secured to the bottom wall 12 through the screw insertion holes 24d and 24f on the opposite sides of the screw insertion hole 24e, then the inclination of the optical device mounting plate 14 can be decreased to move the optical axis of the projection lens 5 downwardly thereby to displace the image on the screen 7 downwardly. By this, inverted trapezoidal distortion by which a rectangular image on the screen 7 has an inverted trapezoidal shape can be corrected.

On the other hand, if the screw insertion hole of the V adjustment piece 24 is changed from that of the "number 2" to the screw insertion hole 24f of the "number 3", then the inclination of the optical device mounting plate 14 can be increased to move the optical axis of the projection lens 5 upwardly thereby to displace an image on the screen 7 upwardly. By this, trapezoidal distortion by which a rectangular image on the screen 7 has a trapezoidal shape can be corrected.

Further, if the securing between the projection 16b with ribs of the optical device mounting plate 14 and the R adjustment piece 27 is changed by changing the screw insertion hole of the R adjustment piece 27 from that of the "reference character B" to the screw insertion hole 27c of the "reference character A" and then the R adjustment piece 27 is secured to the bottom wall 12 through the screw insertion holes 27g and 27h on the opposite sides of the screw insertion hole 27c, then the optical device mounting plate 14 can be rotated in the clockwise in FIG. 21A. By this, an image on the screen 7 can be rotated in the clockwise direction around the center thereof thereby to correct rotational distortion of the image in the counterclockwise direction.

On the other hand, if the screw insertion hole of the R adjustment piece 27 is changed from that of the "reference character B" to the screw insertion hole 27f of the "reference character C" and then the R adjustment piece 27 is secured to the bottom wall 12 through the screw insertion holes 27g and 27h on the opposite sides of the screw insertion hole 27f, then the optical device mounting plate 14 can be rotated in the counterclockwise in FIG. 21A. By this, an image on the screen 7 can be rotated in the counterclockwise direction around the center thereof thereby to correct rotational distortion of the image in the clockwise direction.

With the rear projection display apparatus of the present embodiment, by changing the position of the adjustment plate 17 with respect to the bottom wall 12, the optical axis of the projection lens 5 of the optical unit 4 mounted on the optical device mounting plate 14 can be moved in the upward or downward direction thereby to adjust an image on the screen 7 in the upward or downward direction. Further, by securing the projection 16a with ribs of the optical device mounting plate 14 on one end side of the rear face plate 14-3 to the bottom wall 12 and moving the projection 16b with ribs on the other end side to rotate the optical device mounting plate 14, the image on the screen 7 can be rotated and adjusted around the center of the screen.

It is to be noted that, while the adjustment by means of the V adjustment piece 24 and the R adjustment piece 27 in the embodiment described above is performed among three stages, the number of stages is not limited to this but may be four or more. The number of stages in adjustment here is determined for a production line for products taking a quality dispersion at the stage of production of actual products and quality standards into consideration.

In particular, in such a case wherein, for a certain quality item, the quality standard is ±0.8% and the quality of an actual product is ±1.3%, the difference between them is ±0.5%. Therefore, if adjustment by ±0.5% is performed, then the quality of all products on the line comes within ±0.8%. Therefore, for example, adjustment of three stages of -0.5, 0, +0.5% may be used. Then, if, for example, adjustment of three stages of -0.9, 0, +0.9% is adopted actually, then the quality of all products can be accommodated in the range of ±0.4%.

On the other hand, in such an another case wherein the quality standard is ±0.8% and the quality of actual products is ±2.6%, the difference between them is ±1.8%. Thus, if adjustment among three stages of -1.8, 0, +1.8% is adopted for the correction of ±1.8%, then the range of ±1.0% is applied, and some products do not satisfy the standard. In such an instance, the adjustment may be performed among four stages.

The rear projection display apparatus of the present invention is not limited to the embodiment described hereinabove but can naturally assume various other configurations without departing from the spirit and scope of the present invention. For example, while a liquid crystal display panel of the reflection type is used as the optical system in the embodiment described above, a liquid crystal display panel of the transmission type may be used instead. Or alternatively, a device for controlling a very small mirror as in a display panel of The DLP (Digital Light Processing) type may be used. Further, while the optical device mounting plate, adjustment plate, bottom cabinet and so forth are produced by molding of a plastic resin, naturally any metal material may be used if it allows elastic deformation within a range of use.

While preferred embodiments of the present invention have been described using specific terms, such description is for illustrative purposes only, and it is to be understood that changes and variations may be made without departing from the scope of the following claims.

## Claims

1. A rear projection display apparatus, comprising:
a housing (1);
a screen (7) provided on the front face of said housing (1);
a mirror (6) provided at a predetermined position in the inside of said housing (1) and configured to reflect image light toward said screen (7);
an optical unit (4) including a projection lens (5) configured to project the image light toward said mirror (6) and an image apparatus configured to output the image light to said projection lens (5); and
a light source configured to supply a flux of light to said optical unit (4); **characterized by** further comprising:
an optical device mounting plate (14) having an upper face on which said optical unit (4) is mounted, being provided in a cantilever fashion on a wall (12) provided on the inner side of a lower portion of the front face of said housing (1), and being capable of being deformed under application of a force; and
adjusting means (17, 24, 27) for applying deformation forces to said optical device mounting plate (14) such that the orientation of said upper face on which the optical unit (4) is mounted can be varied to vary an optical axis of the image light to be projected from said projection lens (5) thereby to correct distortion of an image to be displayed on said screen (7).

2. The rear projection display apparatus according to claim 1, wherein said optical device mounting plate (14) provided on said wall (12) is fixed at one end side thereof in a leftward and rightward direction but is moved and fixed at the other end thereof in the leftward and rightward direction to deform said optical device mounting plate (14) thereby to rotate said optical device mounting plate (14) with respect to said wall (12).

3. The rear projection display apparatus according to claim 1 or 2, wherein said optical device mounting plate (14) has a pair of engaging projections (15a, 15b) provided on a lower face thereof,
said rear projection display apparatus further comprising:
a base plate (11) disposed on a bottom face of said housing (1); and
an adjustment plate (17) mounted for movement on said base plate (11) and having a pair of engaging grooves (17a, 17b) provided on a side face thereof;
wherein said engaging projections (15a, 15b) of said optical device mounting plate (14) are engaged with said engaging grooves (17a, 17b) of said adjustment plate (17) in a state where said optical device mounting plate (14) is secured to said wall (12), and
said optical device mounting plate (14) is being deformed by the movement of said adjustment plate (17) to vary the inclination angle of an upper face of said optical device mounting plate (14) with respect to said base plate (11).

4. The rear projection display apparatus according to claim 3, wherein said base plate (11) has a plurality of elongated holes (11a, 11b, 11c) while said adjustment plate (11) has a plurality of guide projections provided on a lower face thereof such that said guide projections are engaged with said elongated holes (11a, 11b, 11c) so as to allow linear movement of said adjustment plate (17) on said base plate (11).

5. The rear projection display apparatus according to claim 2, wherein a securing projection (16b) provided on the other end side of said optical device mounting plate (14) is secured so as to project from an opening (12f) provided in said wall (12) and contacts with a recessed portion of a first adjustment piece (27) provided from the front face side of said housing (1) and the projecting dimension of said securing projection (16b) is equal to the depth of said recessed portion of said first adjustment piece (27) thereby to allow adjustment of the angle of the rotation of said optical device mounting plate (14).

6. The rear projection display apparatus according to claim 5, wherein said first adjustment piece (27) has a plurality of recessed portions having different depths from each other so that said optical device mounting plate (14) can be adjusted to a plurality of rotational angles.

7. The rear projection display apparatus according to claim 3 or 4, wherein a securing projection (18) provided on the back face side of said adjustment plate (17) is secured so as to project from an opening (12e) provided in said wall (12) and contacts with a recessed portion of a second adjustment piece (24) provided from the front face side of said housing (1) and the projecting dimension of said securing projection (18) is equal to the depth of said recessed portion of said second adjustment piece (24) thereby to allow adjustment of the angle of the rotation of said optical device mounting plate (14).

8. The rear projection display apparatus according to claim 7, wherein said second adjustment piece (24) has a plurality of recessed portions having different depths from each other so that the inclination angle of the upper face of said optical device mounting plate (14) with respect to said base plate (11) can be adjusted to a plurality of angles.

## Patentansprüche

1. Rückprojektions-Anzeigevorrichtung, welche umfasst:
ein Gehäuse (1);
einen Bildschirm (7), welcher auf der Vorderfläche des Gehäuses (1) vorgesehen ist;
einen Spiegel (6), der an einer vorher festgelegten Position in der Innenseite des Gehäuses (1) vorgesehen ist und ausgebildet ist, Abbildungslicht in Richtung auf den Bildschirm (7) zu reflektieren;
eine optische Einheit (4), welche eine Projektionslinse (5) aufweist, die ausgebildet ist, das Abbildungslicht in Richtung auf den Spiegel (6) zu projizieren, und eine Abbildungsvorrichtung, die ausgebildet ist, das Abbildungslicht an die Projektionslinse (5) auszugeben; und
eine Lichtquelle, die ausgebildet ist, einen Lichtstrom zur optischen Einheit (4) zu liefern, **dadurch gekennzeichnet, dass** sie außerdem aufweist:
eine optische Einrichtungsbefestigungsplatte (14), welche eine obere Fläche hat, auf welcher die optische Einheit (4) befestigt ist, die in Art eines Auslegers auf einer Wand (12) vorgesehen ist, welche auf der inneren Seite des unteren Bereichs der vorderen Fläche des Gehäuses (1) vorgesehen ist, und welche in der Lage ist, unter Anwendung einer Kraft deformiert zu werden; und
eine Einstellungseinrichtung (17, 24, 27), um Deformationskräfte an die optische Einrichtungsbefestigungsplatte (14) anzulegen, so dass die Orientierung der oberen Fläche, auf welcher die optische Einheit (4) befestigt ist, variiert werden kann, um eine optische Achse des Abbildungslichts zu variieren, welches von der Projektionslinse (5) zu projizieren ist, um dadurch die Verzerrung eines Abbilds, welches auf dem Bildschirm (7) anzuzeigen ist, zu korrigieren.

2. Rückprojektions-Anzeigevorrichtung nach Anspruch 1, wobei die optische Einrichtungsbefestigungsplatte (14), welche auf der Wand (12) vorgesehen ist, an ihrer einen Endseite in einer linken und rechten Richtung fixiert ist, jedoch an ihrem anderen Ende in der linken und rechten Richtung bewegt wird und fixiert ist, um die optische Einrichtungsbefestigungsplatte (14) zu deformieren, um dadurch die optische Einrichtungsbefestigungsplatte (14) in Bezug auf die Wand (12) zu drehen.

3. Rückprojektions-Anzeigevorrichtung nach Anspruch 1 oder 2, wobei die optische Einrichtungsbefestigungsplatte (14) gepaarte Eingriffsansätze (15a, 15b) hat, welche auf ihrer unteren Fläche vorgesehen sind,
wobei die Rückprojektions-Anzeigevorrichtung außerdem umfasst:
eine Basisplatte (11), welche auf einer Bodenfläche des Gehäuses (1) angeordnet ist; und
eine Einstellungsplatte (17), welche zur Bewegung auf der Basisplatte (11) befestigt ist und gepaarte Eingriffsnuten (17a, 17b) aufweist, welche auf ihrer einen Seitenfläche vorgesehen sind;
wobei die Eingriffsansätze (15a, 15b) der optischen Einrichtungsbefestigungsplatte (14) in Eingriff mit den Eingriffsnuten (17a, 17b) der Einstellungsplatte (17) in einem Zustand sind, wo die optische Einrichtungsbefestigungsplatte (14) an der Wand (12) gesichert ist, und
wobei die optische Einrichtungsbefestigungsplatte (14) durch die Bewegung der Einstellungsplatte (17) deformiert wird, um den Neigungswinkel einer oberen Fläche der optischen Einrichtungsbefestigungsplatte (14) in Bezug auf die Basisplatte (11) zu variieren.

4. Rückprojektions-Anzeigevorrichtung nach Anspruch 3, wobei die Basisplatte (11) mehrere Langlöcher (11a, 11b, 11c) hat, während die Einstellungsplatte (11) mehrere Führungsansätze hat, welche auf ihrer unteren Fläche vorgesehen sind, so dass die Führungsansätze in Eingriff mit den Langlöchern (11a, 11b, 11c) sind, um somit eine lineare Bewegung der Einstellungsplatte (17) auf der Basisplatte (11) zuzulassen.

5. Rückprojektions-Anzeigevorrichtung nach Anspruch 2, wobei ein Sicherungsansatz (16b), welche auf der anderen Endseite der optischen Einrichtungsbefestigungsplatte (14) vorgesehen ist, gesichert ist, um somit von einer Öffnung (12f) zu ragen, welche in der Seitenwand (12) vorgesehen ist, und einen Kontakt mit einem Ausnehmungsbereich des ersten Einstellungsstücks (17) herstellt, welches von der vorderen Seitenfläche des Gehäuses (1) bereitgestellt wird, und die Projektionsabmessung der Sicherungsprojektion (16b) gleich der Tiefe des Ausnehmungsbereichs des ersten Einstellungsstücks (27) ist, um dadurch eine Einstellung des Winkels der Drehung der optischen Einrichtungsbefestigungsplatte (14) zuzulassen.

6. Rückprojektions-Anzeigevorrichtung nach Anspruch 5, wobei das erste Einstellungsstück (27) mehrere Ausnehmungsbereiche hat, welche unterschiedliche Tiefen voneinander haben, so dass die optische Einrichtungsbefestigungsplatte (14) auf mehrere Drehwinkel eingestellt werden kann.

7. Rückprojektions-Anzeigevorrichtung nach Anspruch 3 oder 4, wobei ein Sicherungsansatz (18), welcher auf der hinteren Flächenseite der Einstellungsplatte (17) vorgesehen ist, so gesichert ist, um von einer Öffnung (12e) zu ragen, welche in der Wand (12) vorgesehen ist und einen Kontakt mit einem Ausnehmungsbereich eines zweiten Einstellungsstücks (24) herstellt, welches von der vorderen Flächenseite des Gehäuses (1) vorgesehen ist, und die Projektionsabmessung des Sicherungsansatzes (18) gleich der Tiefe des Ausnehmungsbereichs des zweiten Einstellungsstücks (24) ist, um dadurch eine Einstellung des Winkels der Drehung der optischen Einrichtungsbefestigungsplatte (14) zuzulassen.

8. Rückprojektions-Anzeigevorrichtung nach Anspruch 7, wobei das zweite Einstellungsstück (24) mehrere Ausnehmungsbereiche hat, welche unterschiedliche Tiefen voneinander haben, so dass der Neigungswinkel der oberen Fläche der optischen Einrichtungsbefestigungsplatte (14) in Bezug auf die Basisplatte (11) auf mehrere Winkel eingestellt werden kann.

## Revendications

1. Appareil d'affichage à rétroprojection, comportant :
un boîtier (1) ;
un écran (7) prévu sur la face avant dudit boîtier (1) ;
un miroir (6) prévu dans une position prédéterminée à l'intérieur dudit boîtier (1) et configuré pour réfléchir de la lumière d'image vers ledit écran (7) ;
une unité optique (4) comprenant un objectif de projection (5) configuré pour projeter de la lumière d'image vers ledit miroir (6) et un appareil d'image configuré pour délivrer la lumière d'image audit objectif de projection (5) ; et
une source de lumière configurée délivrer un flux de lumière à ladite unité optique (4) ; **caractérisé en ce qu'**il comporte en outre :
une plaque de montage de dispositif optique (14) ayant une face supérieure sur laquelle ladite unité optique (4) est montée, qui est prévue en porte-à-faux sur une paroi (12) prévue sur le côté intérieur d'une partie inférieure de la face avant dudit boîtier (1), et qui peut être déformé sous l'effet de l'application d'une force ; et
des moyens d'ajustement (17, 24, 27) destinés à appliquer des forces de déformation sur ladite plaque de montage de dispositif optique (14) de telle sorte que l'orientation de ladite face supérieure sur laquelle l'unité optique (4) est montée peut être modifier afin de modifier un axe optique de la lumière d'image devant être projetée par ledit objectif de projection (5) de façon à corriger ainsi la déformation d'une image devant être affichée sur ledit écran (7).

2. Appareil d'affichage à rétroprojection selon la revendication 1, dans lequel ladite plaque de montage de dispositif optique (14) prévue sur ladite paroi (12) est fixée au niveau d'un côté d'extrémité dans une direction à gauche et à droite mais est déplacée et fixée au niveau de l'autre extrémité dans la direction à gauche et à droite afin de déformer ladite plaque de montage de dispositif optique (14) de façon à faire tourner ainsi ladite plaque de montage de dispositif optique (14) par rapport à ladite paroi (12).

3. Appareil d'affichage à rétroprojection selon la revendication 1 ou 2, dans lequel ladite plaque de montage de dispositif optique (14) a une paire de saillies d'engagement (15a, 15b) prévues sur une face inférieur,
ledit appareil d'affichage à rétroprojection comportant en outré :
une plaque de base (11) disposée sur une face inférieure dudit boîtier (1) ; et
une plaque d'ajustement (17) montée pour un mouvement sur ladite plaque de base (11) et ayant une paire de rainures d'engagement (17a, 17b) prévues sur une face latérale ;
lesdites saillies d'engagement (15a, 15b) de ladite plaque de montage de dispositif optique (14) sont engagées dans lesdites rainures d'engagement (17a, 17b) de ladite plaque d'ajustement (17) dans un état où ladite plaque de montage de dispositif optique (14) est fixée sur ladite paroi (12), et
ladite plaque de montage de dispositif optique (14) est déformée par le mouvement de ladite plaque d'ajustement (17) afin de modifier l'angle d'inclination d'une face supérieure de ladite plaque de montage de dispositif optique (14) par rapport à ladite plaque de base (11).

4. Appareil d'affichage à rétroprojection selon la revendication 3, dans lequel ladite plaque de base (11) a une multiplicité de trous allongés (11a, 11b, 11c) alors que ladite plaque d'ajustement (11) a une multiplicité de saillies de guidage prévues sur une face inférieure de telle sorte que lesdites saillies de guidage sont engagées dans lesdits trous allongés 11a, 11b, 11c) de façon à permettre un mouvement linéaire de ladite plaque d'ajustement (17) sur ladite plaque de base (11).

5. Appareil d'affichage à rétroprojection selon la revendication 2, dans lequel une saillie de fixation (16b) prévue sur l'autre côté d'extrémité de ladite plaque de montage de dispositif optique (14) est fixée de façon à dépasser d'une ouverture (12f) prévue dans ladite paroi (12) et vient en contact avec une partie renfoncée d'une première pièce d'ajustement (27) prévue dans le côté de face avant dudit boîtier (1) et la dimension de dépassement de ladite saillie de fixation (16b) est égale à la profondeur de ladite partie renfoncée de ladite première pièce d'ajustement (27) afin de permettre ainsi un ajustement de l'angle de rotation de ladite plaque de montage de dispositif optique (14).

6. Appareil d'affichage à rétroprojection selon la revendication 5, dans lequel ladite première pièce d'ajustement (27) a une multiplicité de parties renfoncées ayant différentes profondeurs l'une par rapport à l'autre de telle sorte que ladite plaque de montage de dispositif optique (14) peut être ajustée sur une multiplicité d'angles de rotation.

7. Appareil d'affichage à rétroprojection selon la revendication 3 ou 4, dans lequel une saillie de fixation (18) prévue sur le côté de face arrière de ladite plaque d'ajustement (17) est fixée de façon à dépasser d'une ouverture (12e) prévue dans ladite paroi (12) et vient en contact avec une partie renfoncée d'une deuxième pièce d'ajustement (24) prévue dans le côté de face avant dudit boîtier (1) et la dimension de dépassement de ladite saillie de fixation (18) est égale à la profondeur de ladite partie renfoncée de ladite deuxième pièce d'ajustement (24) afin de permettre ainsi l'ajustement de l'angle de rotation de ladite plaque de montage de dispositif optique (14).

8. Appareil d'affichage à rétroprojection selon la revendication 7, dans lequel ladite deuxième pièce d'ajustement (24) a une multiplicité de parties renfoncées ayant différentes profondeurs l'une par rapport à l'autre de telle sorte que l'angle d'inclination de la face supérieure de ladite plaque de montage de dispositif optique (14) par rapport à ladite plaque de base (11) peut être ajusté sur une multiplicité d'angles.
